(19) Europäisches Patentamt

European Patent Office

Office européen des brevets

(11) **EP 1 072 934 A2**

(12) **EUROPEAN PATENT APPLICATION**

(43) Date of publication:
**31.01.2001 Bulletin 2001/05**

(51) Int. Cl.$^7$: **G02F 1/136**

(21) Application number: **00203844.6**

(22) Date of filing: **26.08.1996**

<table>
<tr>
<td>

(84) Designated Contracting States:
**DE FI GB SE**

(30) Priority: **25.08.1995 US 519269**
**13.10.1995 US 543088**

(62) Document number(s) of the earlier application(s) in accordance with Art. 76 EPC:
**96932162.9 / 0 846 282**

(71) Applicant:
**MASSACHUSETTS INSTITUTE OF TECHNOLOGY**
**Cambridge, MA 02139 (US)**

</td>
<td>

(72) Inventors:
• **Alvelda, Phillip**
  **Berkeley, CA 94704 (US)**
• **Knight, Thomas F., Jr.**
  **Belmont, MA 02178 (US)**

(74) Representative:
**Jeffrey, Philip Michael**
**Frank B. Dehn & Co.**
**179 Queen Victoria Street**
**London EC4V 4EL (GB)**

Remarks:
This application was filed on 02 - 11 - 2000 as a divisional application to the application mentioned under INID code 62.

</td>
</tr>
</table>

(54) **VLSI visual display**

(57) The present invention provides a visual display including a high resolution miniature display compatible with VLSI technology and an optical system such as an optical magnifier used to enlarge the images displayed on the miniature display to be visible to the naked eye. The miniature display includes a VLSI backplane having an array of display elements monolithically formed with its driving circuit on a single crystalline semiconductor. Signal processing circuit or a microprocessor used to process image signals for the display may also be formed monolithically with the array and its driving circuit. The array may be designed using a software silicon compiler program to have randomly displaced elements or superpixels for reducing image aliasing. The array may also be designed to have display elements positioned and scaled to compensate for the optical distortion introduced by the magnifier.

FIG. 10C

**EP 1 072 934 A2**

**Description**

Field of the Invention

The present invention relates to visual displays and more particularly to visual displays having miniature displays that are compatible with very large scale integrated ("VLSI") circuit technology. The invention also relates generally to color generation devices and methods for manufacturing such devices. In particular, the invention also relates to color microdisplays and methods for manufacturing such microdisplays.

Background of the Invention

Current commercially available electronic displays are dominated by cathode ray tubes ("CRTs") and liquid crystal displays ("LCDs"). LCDs offer advantages in power, size, and safety, while CRTs are well understood and inexpensive to manufacture. Recent advancements in LCD technology have led to the development of large area, high resolution LCDs, initially using a passive matrix scanning technique (i.e., pixels in the display are directly controlled by the address lines), and more recently using active matrix addressing techniques (i.e., the pixels in the display are controlled by addressing transistors associated with each pixel).

Compared with passive matrix LCDs, active matrix LCDs produce higher quality images but require greater capital investments in manufacturing. To manufacture active matrix LCDs photolithographic masks of the same size as the LCDs and processing equipment suitable for handling the same size substrate are required. In addition, active matrix displays are generally built on glass substrates using either amorphous or polycrystalline thin film transistors; ("TFTs") which typically exhibit poor electrical characteristics and low yield. Further, because thin film transistors typically operate at a relatively low speed, the speed of the display is thus limited. Moreover, due to the low device density and low yield associated with thin film transistors, the resolution of such LCDs is limited.

Besides the above-described TFT LCDs, there has been a great deal of interest in developing silicon backplane LCDs. In contrast to TFT LCDs which use thin film transistor circuits fabricated on a glass substrate as a backplane, silicon backplane LCDs use integrated circuits fabricated on single crystalline silicon substrates as backplanes. Due to the advantages of silicon integrated circuits over TFT circuits, silicon backplane LCDs operate at a higher speed and offer higher resolution and higher yield.

*Kaneko, E.*, "Liquid Crystal TV Displays: Principles and Applications Of Liquid Crystal Displays," KTK Scientific Publishers, 1987, describes a MOS transistor switch matrix addressed liquid crystal TV display. The TV display comprises a MOS transistor-addressed pixel array formed on a single crystalline silicon substrate; the array is integrated with its driving circuit as a hybrid and is connected to the driving circuits by wire bonding. This TV display suffers several significant drawbacks. First, because the yield for the array decreases drastically with increased array size, the size of the display is limited to about one inch by one inch, which is generally too small to be used as a TV or computer display. Second, the driver circuits are not monolithically integrated with the display array, which makes it expensive to fabricate and which also limits the resolution of the display since it is very difficult to interconnect the driver circuits with an array having a large number of pixels using wire bonding. Consequently, the resolution of the described TV display is limited for the purposes described herein. For example, one of the described TV displays has only 240 x 240 pixels formed on an area of 3.6 cm x 4.8 cm.

*Jared et al*., "Electrical Addressed Spatial Light Modulator That Uses A dynamic Memory", *Optical Letters*, (**16:22**), pp. 1785-1787 (November 15, 1991), describes an electrically addressed spatial light modulator that consists of a silicon VLSI backplane chip and a ferroelectric-liquid-crystal ("FLC") cell. The VLSI chip includes a 64 x 64 array of pixels located at the center of the chip; it is fabricated using a 2 micron, n-well, complementary metal-oxide-semiconductor ("CMOS") process. The 64 x 64 pixel array appears to be monolithically formed with its electronic addressing circuits on the VLSI chip. However, this type of modulator would not be useful for image displays because the array area is too small.

Despite the clear advantages of VLSI backplane LCDs over TFT LCDs in speed and resolution, they are not viewable with the naked eye and are not used commercially for image displays.

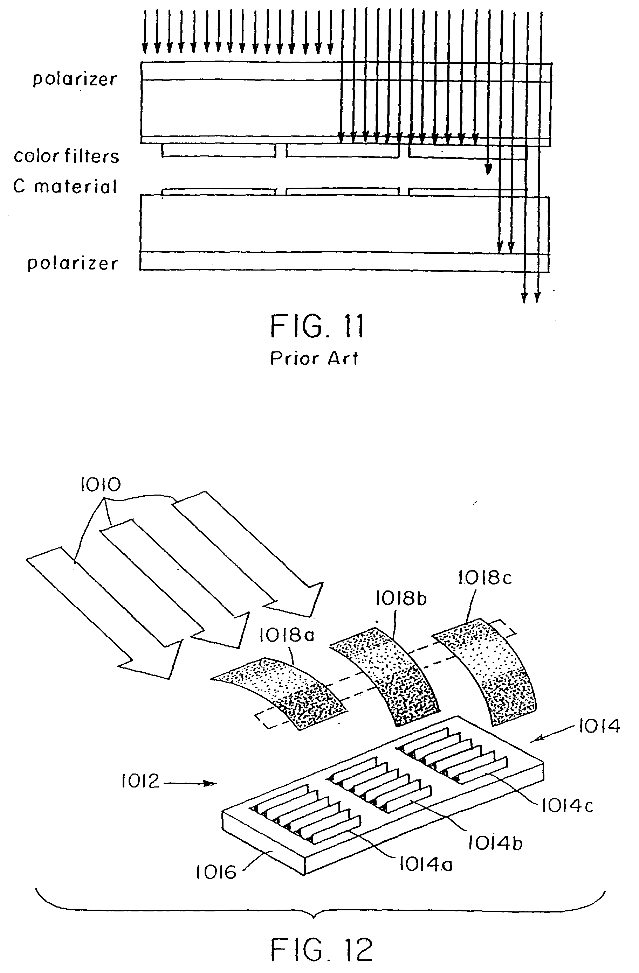

Presently, industry-standard color LCDs are fabricated using one of several technologies. A common approach involves the formation of pixel triads on the CMOS, BICMOS, NMOS, or other microcircuit substrate (e.g., silicon) to achieve full color (see FIG. 11). More specifically, each pixel is replicated three times, and a mosaic of red blue and green gel filters is placed over each pixel triad. A transparent conductor is deposited on the inside surface of a cover layer. Spacers are applied to either the substrate or the cover layer, and the two are bonded together. The region between the substrate and cover layer is filled with liquid crystal material. Polarizes may also be laminated over the cover layer.

Because pixel triads are used, the resolution of the display is decreased by a factor of three. Moreover, the transmitted light through the liquid crystal region passes through the polarizes and color filters, typically reducing the incident illumination to four percent (4%) or less. Thus, this approach can be regarded as an inefficient solution to generating a high-efficiency, color display. While slight improvements are under development using subtractive color filters and dichroic combiners, the expected efficiencies only approach twelve percent (12%).

Another approach for making color LCDS involves the use of filters formed from diffraction gratings. However, color microdisplays with diffraction-based pixels and convenient methods for manufacturing such displays inexpensively are not previously known.

Summary of the Invention

The present invention provides a visual display which comprises a miniature display compatible with VLSI technology to display thereon images having desired quality but are generally too small to be viewed by the naked eye and an optical system disposed in front of the miniature display for enlarging such images to be visible at the desired image quality.

The miniature display includes an array of display elements of sufficient resolution and a VLSI circuit monolithically integrated with the array for driving the display elements. The VLSI circuit includes input terminals for providing electrical signals thereto to generate the images. The VLSI circuit may further include a signal processing circuit or a microprocessor for processing signals applied through the input terminals to affect the displayed image.

In a preferred embodiment, the visual display includes a miniature display that is a liquid crystal display and the visual display further includes a light source for providing illumination to the liquid crystal display. The liquid crystal display comprises a transparent cover positioned above the array of display elements, a transparent electrode deposited on the surface of the cover facing the array, and liquid crystal material such as dynamic scattering mode liquid crystal material disposed between the array and the transparent electrode.

In another preferred embodiment, a visual display with reduced image aliasing is provided. The visual display includes a miniature display having an array of display elements with the positions of the display elements being displaced by small random distances from the positions of elements in a corresponding symmetrical array. Preferably, the layout of the array is made with the use of a software silicon compiler program to determine the positions and the displacement of the display elements.

In another preferred embodiment, a visual display including a miniature display having an array of super-pixels, each comprising a central display element surrounded by a plurality of ancillary display elements. In the array, the central display elements are directly driven by a VLSI circuit and the ancillary display element are driven in response to electrical signals from neighboring central display elements. Image aliasing in the display is reduced.

In another preferred embodiment, a visual display including a miniature display made to compensate for optical distortion of the optical system used to view the images displayed by the miniature display. The optical distortion of the optical system is characterized by an optical distortion function. The miniature display includes an array of display elements which are positioned and scaled in accordance with an inverse function of such optical distortion function Preferably, the array is made with the use of a silicon software compiler program to determine the positions of and to scale the display elements.

The present invention also provides a virtual display which utilizes the visual display of the present. The virtual image display comprises an eye glass frame, at least one lens having a reflective surface mounted therein, and a visual display of the present invention. The visual display is positioned such that images displayed thereon are reflected by the lens into an eye of a person wearing the frame.

Preferably, the reflective surface of the lens is curved in accordance with a three-dimensional elliptical surface, and the visual display and the eye of the viewer are positioned at two focal points of the elliptical surface respectively such that the images displayed by the visual display are reflected by the reflective surface right into the eye of the person wearing the eye glass frame.

The present invention also features color generation devices and methods which utilize diffraction-based color pixels to provide full color reflection-mode or transmission-mode microdisplays. A diffraction-based color display operates by illuminating an array of pixels, each including a diffraction grating element, with light from a source. Each element includes one or more small diffraction gratings. The source may be at least one incandescent bulb, cold-cathode bulb, LED, white light bulb, pseudo-white light or tri-band bulb. When white light (for example) illuminates the pixels, a rainbow pattern of light (i.e., a diffracted spectrum) is diffracted from or transmitted through each grating and redirected to viewing optics according to the grating configuration.

Each element may comprise, for example, a triad of diffraction gratings. If the pitch of each grating in each triad is different, the angular direction of the diffracted spectrum differs for each grating. In other words, each grating per triad diffracts the color components of the incident light into different directions. Thus, if each grating per triad has a slightly different pitch, the diffracted light from each grating appears as a different color when viewed from a single angle. Drive and address circuitry selectively activates the optically active material adjacent to one or more gratings to produce any desired combined color for each triad.

Each element may comprise a single diffraction grating. Each grating is configured to combine the color components of incident light (from multiple sources) and direct the combination in a specific direction. Once again, drive and address circuitry selectively activates the optically active material to produce any desired combined color for each element.

In one aspect, the invention features a method for manufacturing a diffraction-based color generation device. An array of pixels are formed on a semiconductor substrate (e.g., silicon, quartz, gallium arsenide, indium phosphide, or mercury cadmium telluride) using a CMOS, BICMOS, NMOS, or other microcircuit process. More specifically, an array of diffraction grating elements are formed on the substrate for each pixel. Each element includes one or more diffraction gratings. The array of diffraction grating elements may be a planar array which is patterned in a layer of metalization deposited on the substrate during the microcircuit process. The pitch of each diffraction grating per element may be optimized as a function of the angle of incident light, such that each pixel diffracts color components of the incident light into specific directions.

The direction of the diffracted spectra is also a function of the grating pitch. More specifically, the grating pitch and distribution in combination with the effects of dispersion are precisely configured to diffract a selected color of the diffracted spectrum through viewing optics. Further, each grating may be "blazed" such that most of the diffracted light through the viewing optics is a single order. The individual strip patterns of each grating are fabricated so the grating casts most of the diffracted spectrum into the angular direction of a single order.

The method also includes positioning a source of light adjacent to the pixel array to provide incident light to the diffraction grating elements. The source may provide collimated light or non-collimated light. Further, the source may comprise a white light, pseudo-white or tri-band emitter, or multiple narrow band (e.g., red, green, and blue) emitters. A cover plate is disposed above the substrate and has a layer of conductive material, such as indium tin oxide (ITO), on a surface of the cover plate opposite the substrate. An optically active material, such as liquid crystal material, is disposed between the substrate and the cover plate.

The method also includes positioning a system of optical elements adjacent to the substrate which images the diffracted light and may magnify the pixel array. Further, the system presents images to the eye of the viewer. Examples of such imaging optics include magnifying or afocal eyepieces.

The method also includes forming an array of driving and addressing circuitry on the substrate. The driving and addressing circuitry may be based on a three-transistor DRAM or SRAM architecture and provides column and row selection for activating each pixel. An array of optical elements is formed adjacent the array of pixels for directing the primary colors for each pixel into the optically active material.

In another aspect, the invention features a color generation device. The device includes an array of pixels disposed on a semiconductor substrate. The pixel array includes an array of diffraction grating elements, including one or more diffraction gratings, formed in a layer of metalization deposited on the substrate using a microcircuit process. For each element, the pitch of each diffraction grating may be optimized as a function of the angle of incident light, such that each pixel diffracts incident light into a spectrum of the colors. More specifically, each pixel diffracts color components of the incident light into specific directions. Further, each grating may be blazed such that most of the diffracted spectrum is of one order.

A source of light is disposed adjacent the pixel array to supply light to the diffraction grating elements. The source may provide collimated light or non-collimated light. Further, the source may include a white light emitter or multiple narrow band (e.g., red, green, and blue) emitters. A cover plate is disposed above the substrate and has a layer of conductive material on a surface of the cover plate opposite the substrate. The conductive material serves as an electrode for the pixel array. The pixel array also includes an array of driving and addressing circuitry disposed on the substrate and providing column and row selection for activating each pixel. An optically active material is disposed between the substrate and the cover plate. An array of optical elements is disposed adjacent to the array of pixels for directing diffracted colors for each pixel through the optically active material into or to the eye of the viewer.

High-performance liquid crystal-on-silicon color microdisplays suitable for virtual imaging applications have been fabricated in accordance with the claimed methods. For example, a color microdisplay can be mounted in a pair of eyeglasses to provide a virtual reality display.

Brief Description of the Drawings

These and other features, objects, and advantages of the present invention will become more apparent from the following detailed description in conjunction with the appended drawings in which:

FIG. 1 depicts a reflective-mode visual ,display of the present invention;
FIG. 2 illustrates a transmissive-mode visual display of the present invention;
FIGs. 3A and 3B illustrate a virtual image display utilizing the visual displays of the present invention;
FIG. 4 depicts the physical arrangement of a LCD of the present invention;

FIGs. 5A-5C show the schematic circuit diagram of a VLSI backplane, the circuit diagram and the layout of a single pixel in the VLSI backplane, respectively;

FIGs. 6A and 6B illustrate the operation of a single pixel cell having dynamic scattering liquid crystal material;.

FIG. 7 illustrates an alternative embodiment of the VLSI backplane;

FIG. 8 illustrates a preferred embodiment of the visual display having an array of randomly displaced pixels for reducing image aliasing;

FIG. 9 depicts another preferred embodiment of the visual display having an array of super-pixels;

FIG. 10A illustrates the optical distortion of a magnifier having short focal length;

FIG. 10B shows a computer-displayed drawing depicting the inverse distortion function for a LEEP-type optical system;

FIG. 10C shows a top view of a fabricated pixel array designed to compensate for optical distortion.

FIG. 11 is a partial cross-sectional view of the polarizer, color filters and liquid crystal material in a conventional liquid crystal color display.

FIG. 12 is a perspective view of a reflected-mode diffraction grating element comprising a triad of diffraction gratings fabricated on a semiconductor substrate using a microcircuit process.

FIG. 13 is a perspective view of a diffraction grating element comprising a single diffraction grating fabricated on a semiconductor substrate using a CMOS, BICMOS, NMOS, or other microcircuit process.

FIG. 14A is a partial cross-sectional view of a ruled-metal blazed diffraction grating.

FIG. 14B is a partial cross-sectional view of a step-etched metal blazed diffraction grating.

FIG. 14C is a partial cross-sectional view of a blazed diffraction grating in which metal is disposed over a step-etched oxide layer.

FIG. 14D is a partial cross-sectional view of blazed diffraction gratings with varying oxide thicknesses to optimize phase grating diffraction efficiency.

FIG. 14E is a partial cross-sectional view of blazed diffraction gratings for a tramsmitted mode display.

FIG. 14F is a partial cross-sectional view of blazed diffraction gratings for a tramsmitted mode display with varying oxide thicknesses to optimize phase grating diffraction efficiency.

FIG. 14G is a partial cross-sectional view of blazed diffraction gratings with varying pitch across the display.

FIG. 14H is a partial cross-sectional view of a display including diffraction gratings instead of reflective pixel electrodes.

FIG. 14I is a partial cross-sectional view of a blazed diffraction grating for another tramsmitted mode display with varying oxide thicknesses to optimize phase grating diffraction efficiency.

FIG. 15A is a side view of an optical layout for single source reflected mode or transmitted mode color generation device.

FIG. 15B is a side view of an optical layout for multiple source reflected mode or transmitted mode color generation device.

FIG. 16 is a cross-sectional view of a color generation device incorporating the principles of the invention.

FIG. 17 is an illustration of a method for assembling a color generation device having a cover layer, optically active material, spacers and semiconductor substrate.

FIG. 18 is a schematic diagram of drive electronics and pixel storage structure in a microdisplay in accordance with the present invention.

FIG. 19 is a schematic diagram illustrating data generation using superpixels.

FIG. 20 is a schematic pictorial diagram illustrating the general approach to microdisplay assembly in accordance with the present invention.

FIG. 21 is a schematic diagram illustrating simulation results for a waveguide in accordance with the present invention.

FIGS. 22A and 22B are graphs illustrating results of a simulation of a waveguide in accordance with the present invention.

FIG. 23 is a plot of a simulated gaussian beam propogation along a tunable waveguide in accordance with the present invention.

FIGs. 24A and 24B are schematic top views for two different modes of waveguide operation in accordance with the present invention.

Detailed Description of the Invention

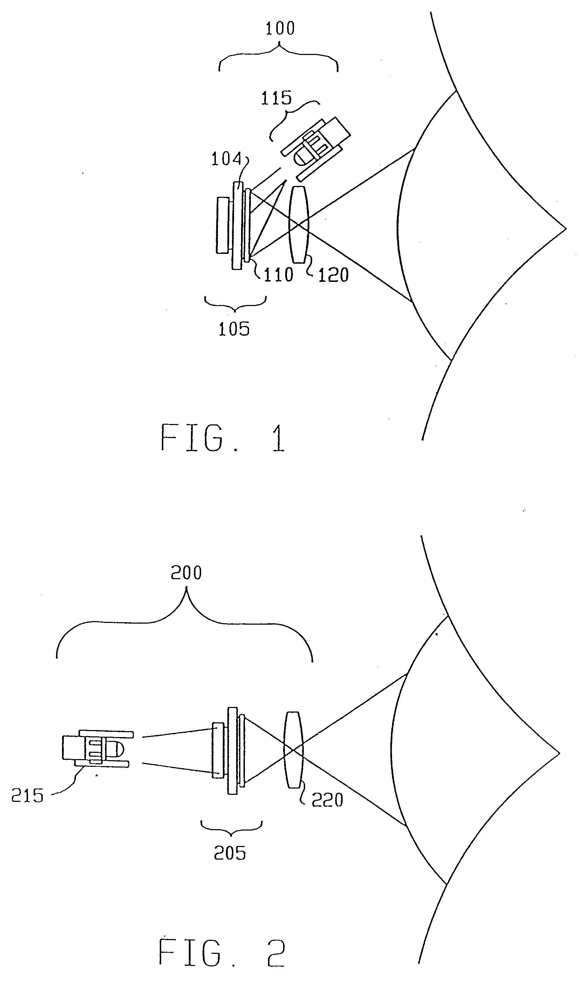

Referring to FIG. 1, a visual display 100 of the present invention comprises a reflective-mode miniature display 105 producing images on its front surface 110, a light source 115 for illuminating front surface 110, and an optical system 120 for magnifying the images displayed by the miniature display so that the images are visible to the naked eye.

Alternatively, a visual display of the present invention (not shown) comprises a miniature display compatible with VLSI technology and includes an array of display elements of sufficient resolution to provide a desired image quality, a VLSI circuit for driving the display elements to form images on the array that are generally too small to be viewed by the naked eye, and an optical system disposed in front of the miniature display for recording such images such that they can be displayed or viewed by the naked eye. The VLSI circuit is monolithically integrated with the array and it includes input terminals for providing electrical signals thereto to generate such images.

Miniature display 105 includes a reflective-mode liquid crystal display 104 and is compatible with VLSI technology. As defined hereinafter, a display is compatible with VLSI technology if it includes an array of display elements for display images thereon and a circuit for driving the array to display the images and if the array and its driving circuit are monolithically formed on a single crystalline semiconductor substrate. Preferably, a display compatible with VLSI technology has a high resolution.

Referring to FIG. 2, in an alternative embodiment, a visual display 200 comprises a transmissive-mode miniature display 205 compatible with VLSI technology, a light source 215 for providing a backside illumination, and an optical system 220 for magnifying images displayed on the front side of the miniature display. In a preferred embodiment, the transmissive-mode miniature display is a transmissive-mode liquid crystal display.

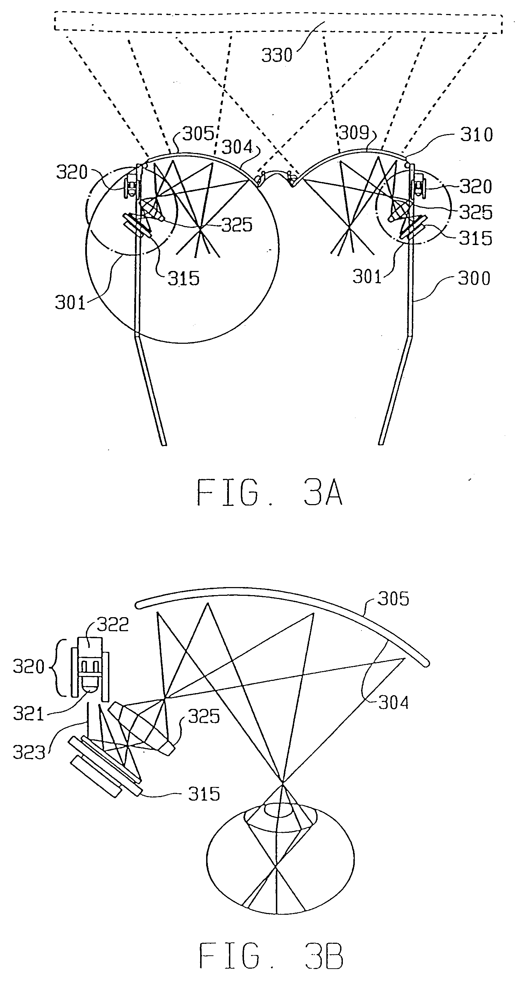

FIGs. 3A and 3B illustrate an eyeglass type virtual image display which utilizes the visual displays described above. The virtual image display comprises an eyeglass frame 300, a pair of lenses 305 and 310 mounted on the frame, and two visual displays 301 of the type described above. Lenses 305 and 310 have reflective surfaces 304 and 309, respectively, for reflecting images generated by the visual displays to the eyes of the person wearing the frame. The reflected images are seen by the person as if they were displayed on a distant virtual screen 330.

Preferably, each of the reflective surfaces is curved in accordance with a three-dimensional elliptical surface. Moreover, the visual display is positioned and the frame designed such that the visual display and an eye of a viewer wearing the frame are approximately located at the two focal points respectively of such elliptical surface; this ensures that the image displayed on the visual displays are reflected directly by the elliptical surface into the eyes of the viewer.

The reflective surfaces may be formed to cover the entire lenses or only portions of the lenses for a heads-up display. To provide electrical signals to the liquid crystal displays, the virtual image display may further include a video cassette recorder, a video compact disc player, or a computer (not shown) electrically-connected to the liquid crystal displays.

It should be apparent to one skilled in the art that, although FIGs. 3A and 3B depict a virtual display of the present invention with reflective mode visual displays, transmissive-mode visual displays may also be used in place of the reflective-mode visual displays, which is also within the scope of the present invention.

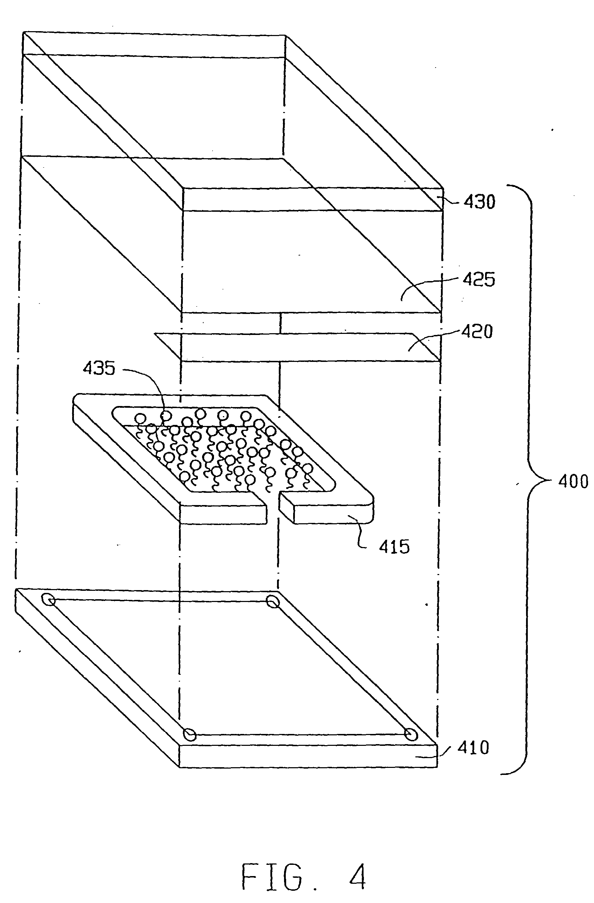

In the preferred embodiment, the miniature display is a liquid crystal display compatible with VLSI technology. The liquid crystal display in accordance with the present invention is described below in conjunction with FIGS. 4-7.

FIG. 4 illustrates the physical arrangement of a preferred reflective-mode liquid crystal display. For clarity, the components of the LCD are purposely drawn to be vertically spaced apart. As shown, an LCD 400 of the present invention includes a VLSI backplane 410 and a glass cover 430 having a transparent electrode 425 such as a layer of indium-tin-oxide deposited on the surface of the cover facing the backplane. Disposed between the backplane and the glass cover are a polyamide spacer ring 415, liquid crystal material 435 and a bonding pad 420 used to join the cover glass and the spacer. The VLSI backplane herein refers to an array of display elements and a circuit for driving the array monolithically formed on a single crystalline substrate.

FIG. 5A depicts a schematic circuit diagram of a preferred VLSI backplane 500 which includes an array 510 consisting of rows and columns of display elements 515. Each display element is a minimum controllable display unit and is referred to hereinafter as a pixel. To obtain desired resolution, the array contains a large number of pixels formed on a small area. For example, the array may include 2,000 by 2,000 (4 mega) pixels formed on one square centimeter area with each pixel having a dimension of 5 by 5 microns. As it is known to one of skill in the art, this kind of resolution is in general only obtainable by the use of VLSI technology.

In the VLSI backplane, a row scanning bus driver 520, connected to the rows of display elements through a row bus 521, operates to sequentially scan rows of the pixels so that each frame of the images is formed by scanning the entire array line by line. The row scanning bus driver has a clock terminal 501 for receiving an external clock signal and a terminal 502 for receiving a row control signal.

The backplane also includes a video signal buffer 525 connected to the columns of pixels via a column bus 524 and a video signal driver 526 coupled to the video signal buffer. Video signal driver 526 receives a clock pulse signal from terminal 503 and serial video data from terminal 504; it then sequentially shifts the serial video data to form a row of video data to be written into a row of the pixels. The row of data is subsequently provided to the video signal buffer. Upon receiving a synchronized signal at a terminal 505, the video signal buffer provides the row of data to column bus 524 while a row of the pixels is turned on by the row scanning bus driver. Consequently, the row of video data is stored into the row of pixels and a line of image is thus formed. The process is then repeated line by line until a frame of image is formed. Preferably, the row scanning bus driver, the video signal buffer and the video signal driver are all CMOS circuits formed on a single crystalline silicon substrate:

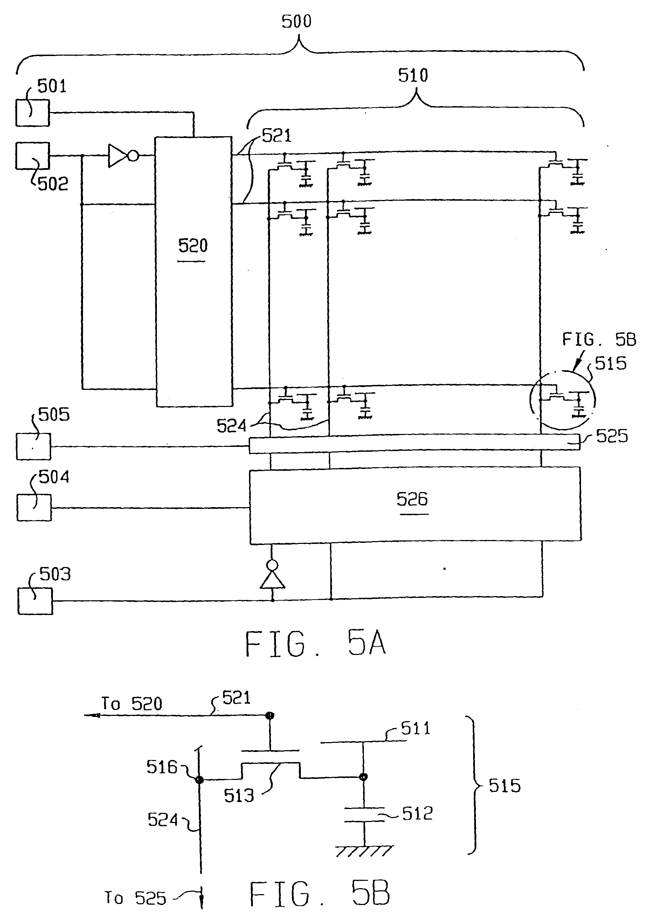

FIGs. 5B and 5C illustrate a schematic circuit diagram and the layout of an individual pixel 515. As shown, individual pixel 515 includes a reflective pixel electrode 511 to be physically in contact with the liquid crystal material, a MOS storage capacitor 512 for storing a video signal charge sufficient to drive the liquid crystal material between successive frame periods, and a MOS field effect transistor 513 operating as a switch to the pixel. The pixel is selected by applying a row scanning signal to the gate terminal of MOS transistor 513. When the pixel is selected and a video signal is provided to a source terminal 516 from the column bus 524, MOS transistor 513 is turned on and the video signal is provided from the source terminal to the drain terminal of the MOS transistor and to the pixel electrode and the capacitor.

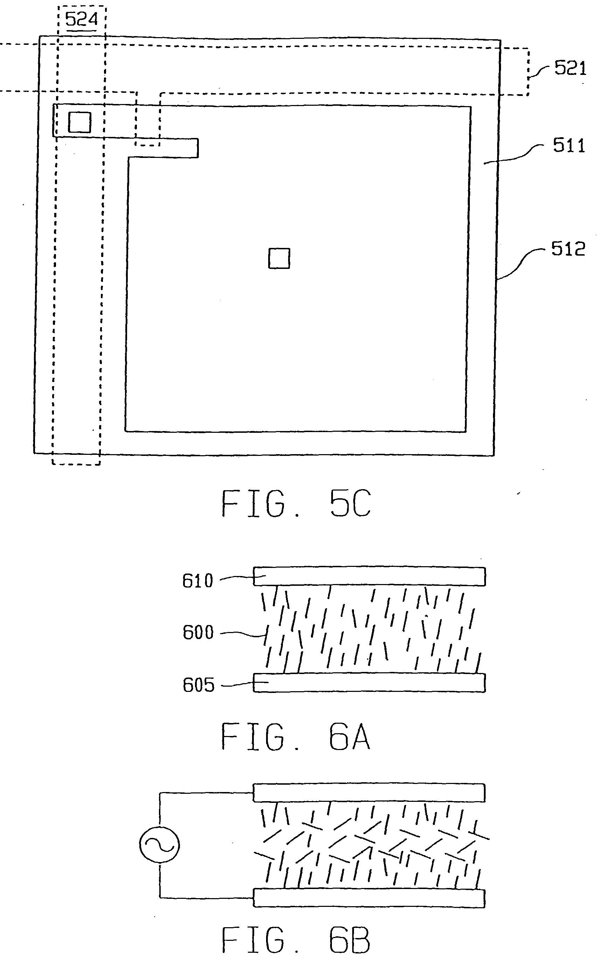

The principle of operation for a single pixel is now described in conjunction with FIGs. 6A and 6B. Referring to FIG. 6A, in each pixel, dynamic scattering ("DS") mode liquid crystal material 600 is disposed between a reflective pixel electrode 605 and a transparent ground electrode 610 formed on the cover glass. Before the liquid crystal material is filled in vacuum into the space between the reflective pixel electrode and the ground electrode, the surfaces of both electrodes are treated with a coupling agent such as alkoxysilane so that, when there is no electrical signal applied to the electrodes, molecules of the DS liquid crystal material are aligned perpendicularly to the electrodes. At this state, the DS liquid crystal material is transparent to light and an incident illumination will traverse the DS liquid crystal material and be reflected by the reflective display electrode. As a result, the pixel appears to have a silver color.

Referring to FIG. 6B, when a video signal is applied between the electrodes, the perpendicular alignment of the DS liquid crystal molecules is destroyed and the incident illumination is scattered. At this state, the pixel appears gray and the degree of grayness depends on the amplitude of the applied video signal.

When the entire array operates, gates of successive rows of the MOSFETS are turned on sequentially from top to bottom by pulses from the row scanning bus drivers and appropriate video signals are simultaneously applied to the source terminals of the MOS transistors from the video signal buffer. The video signals charge the storage capacitors associated with the MOS transistors to levels related to the video signals. The charges stored in the capacitors are then retained for a frame period, leaking off slowly through the liquid crystal layer. As the capacitors are discharged through the DS liquid crystal layer, the layer produces a gray shade or an image that corresponds to the video signals applied to the capacitors during addressing.

For the transmissive-mode visual display shown in FIG. 2, a transmissive-mode LCD having a VLSI backplane is used. The VLSI backplane includes a thin substrate transparent to a backside illumination and thin layers of doped silicon or polysilicon which is transparent to light as pixel display electrodes. Images are generated by illuminating the backside of the VLSI backplane and by providing video signals to pixel display electrodes to modulate the local transmissivity of the liquid crystal material to generate images.

The transmissive-mode VLSI backplane may be formed by first fabricating the array of pixels and its driving circuit on an opaque silicon substrate and subsequently thinning the substrate until it becomes transparent. Another way to fabricate the transparent backplane is first forming a thin layer of single crystalline epitaxial silicon on a silicon dioxide substrate, fabricating the array and its driving circuit on the silicon layer, and then removing the silicon dioxide substrate.

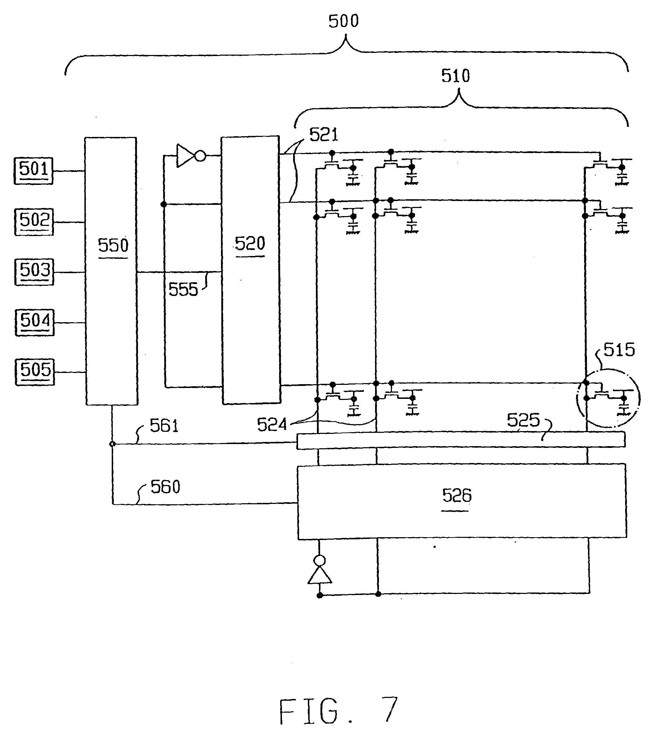

FIG. 7 illustrates the schematic circuit diagram of a VLSI backplane for another embodiment of the visual display, wherein like elements are similarly designated as those in FIG. 5A. As depicted, a VLSI backplane 500 includes *inter alia* a microprocessor 550 monolithically formed on the same substrate with a pixel array 510, a row scanning bus driver 520, a video signal driver 526 and a video signal buffer 525.

Illustratively, microprocessor 550 is interconnected to row bus driver 520 via a bus 555, to video signal driver 526 via a bus 560, and to video signal buffer 525 via a bus 561. The microprocessor receives input video signals and other signals through terminals 501-505 and processes the video signals before providing the processed signals to the row scanning bus driver, the video signal driver and the video signal buffer. Thus real-time image signal processing may be performed by the microprocessor. As it will be apparent to one of skill in the art, a signal processing circuit may be used in replace of or in combination with the microprocessor circuit.

In an alternative embodiment (not shown), a VLSI backplane including a matrix of microprocessors is provided. Each of the microprocessors is located in the vicinity of and associated with one or more pixels. The microprocessors are used to perform local-algorithm imaging processing tasks such as resolution enhancement by interpolation or contrast enhancement and are monolithically integrated with the pixel array and the driver circuits.

In another preferred embodiment, the visual display of the present invention includes a miniature display having a VLSI backplane designed for reducing image aliasing. The backplane includes a pixel array with the positions of the pixels displaced by small random distances from the positions of pixels in a corresponding symmetrical array. This perturbation of pixel positions subtly breaks the symmetry and regularity of the pixel array and as a result greatly reduces image aliasing.

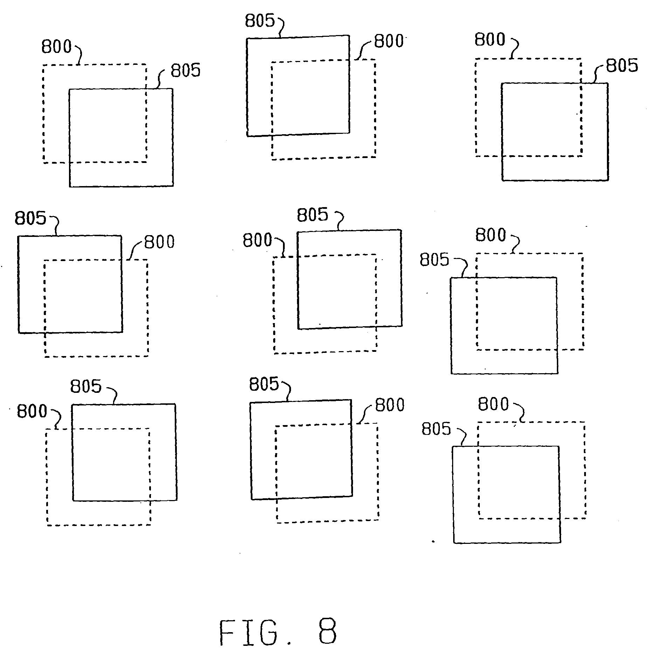

FIG. 8 illustrates the array of displaced pixels. In the drawing, pixels 800 represents a corresponding symmetrical array and pixels 805 are the result of displacing pixels 800 by small random distances. Preferably, the array is designed with the use of a software silicon compiler program and the displacement of pixel position is implemented by the use of such silicon compiler program. In designing the array with displaced pixels, factors such as the maximum allowable displacement for each pixel without noticeable image distortion and the minimum acceptable distance between the pixels should be considered. Those factors are important in preventing image distortion and pixel overlapping.

As compared with other available methods for reducing image aliasing which generally requires additional circuitry for real-time signal processing, the random displacement of pixel positions uses no additional circuitry and requires no real-time signal processing. Moreover, it can be accomplished by modifying existing silicon circuit design tools without substantially additional cost. It should be apparent to those skilled in the art that the present method for reducing aliasing by random displacement of pixel positions is applicable to any types of displays using a pixel array and it is not limited to LCDS.

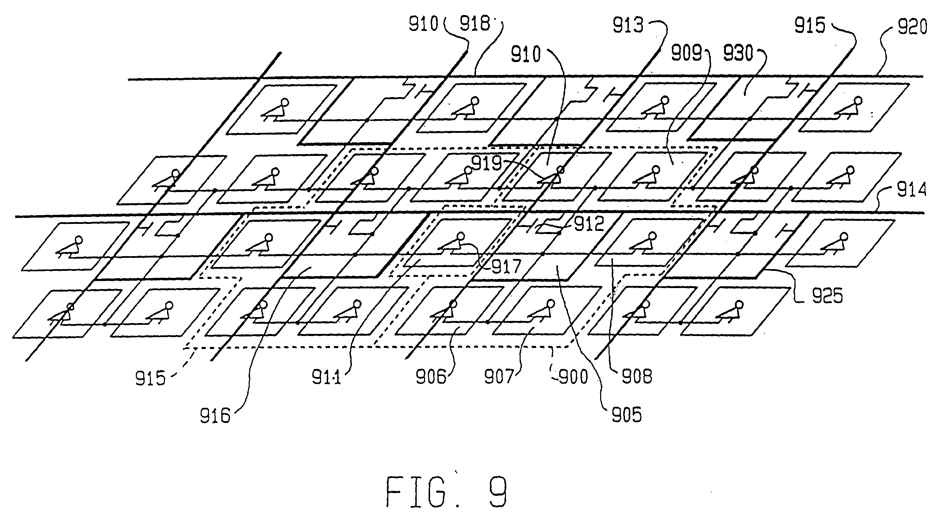

In another preferred embodiment, the visual display of the present invention includes a miniature display having an array of super-pixels for reducing image aliasing. As depicted in FIG. 9, each super-pixel comprises a central display element surrounded by a number of ancillary display elements and a switch MOSFET. For example, a super-pixel 900 includes a central display element 905 surrounded by ancillary display elements 906, 907, 908, 909, 910, and 911. Neighboring super-pixels share the, ancillary display elements interposed between them. For example, super-pixels 900 and 915 share ancillary display elements 911.

In each super-pixel, only the central display element is directly driven by a driver circuit. For example, central display element 905 is driven by the driver circuit via MOSFET 912 through a row address line 913 and a column address line 914; its surrounding ancillary elements are not directly driven by the driver circuit through the address lines.

Each ancillary display element, however, is driven by a signal from an NAND gate responsive to two video signals from its neighboring central display elements. For example, ancillary element 911 is driven by a signal at the output of an NAND gate 917 which are responsive to video signals from neighboring central display elements 905 and 916.

Other types of circuits may also be used in addition to or in place of the NAND gates. For example, instead of being responsive to the video signals of neighboring central display elements, the ancillary elements may respond to signals other than the video signals of the two neighboring central display elements, which is also within the scope of the present invention.

In yet another preferred embodiment, the visual display of the present invention includes a miniature display having a pixel array made to compensate for nonlinear optical distortion of an optical system used to view the images display on the pixel array. Although there are currently available methods for compensating optical distortion in an artificially-generated "virtual-reality display" by, for example, pre-processing image data in real-time to pre-warp the image data before it is "distorted" by a lens and providing the processed data to a display, those methods generally require extensive hardware for real-time image processing and their utilities are thus severely limited.

The optical distortion of an optical system is characterized by an optical distortion function. To compensate for the optical distortion, the positions and shapes of the pixels in the array are determined in accordance with an inverse function of the optical distortion function. As a result, the effect of the optical distortion on the images that are finally seen through the optical system is substantially compensated. No real-time signal processing or additional circuitry is required.

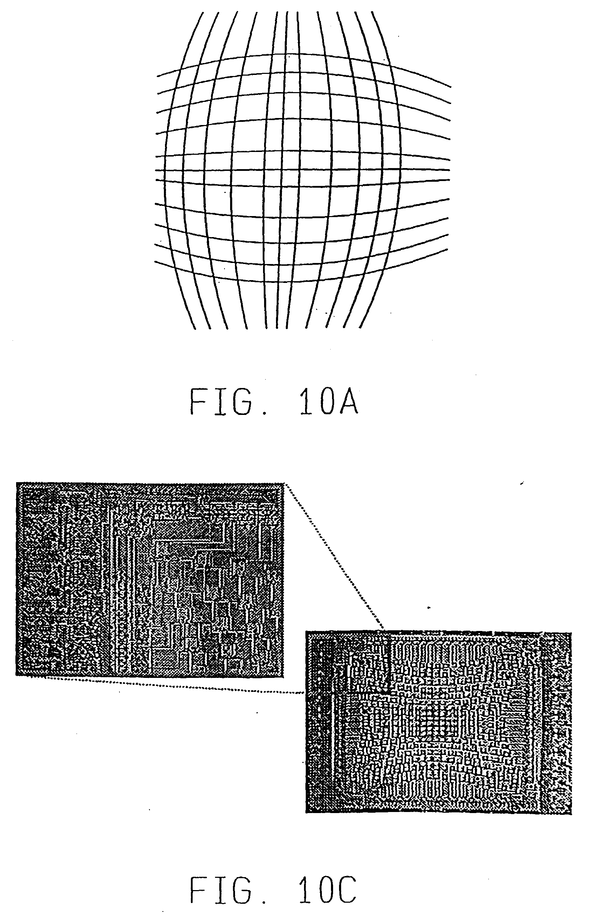

FIG. 10A illustrates what a regular square grid structure would look like if it is seen through a typical short-focal-length optical magnifier. The drawing shows that the image seen through the central portion of the magnifier is not distorted, but at the periphery of the magnifier there is substantial distortion. It is seen that the local magnification $M(r_i)$ of the magnifier decreases with an axial radius $r_i$ and each point on the image moves radially inward toward the center of the magnifier. This type of distortion, typically called negative or barrel distortion, is typical for a magnifier having a short focal length.

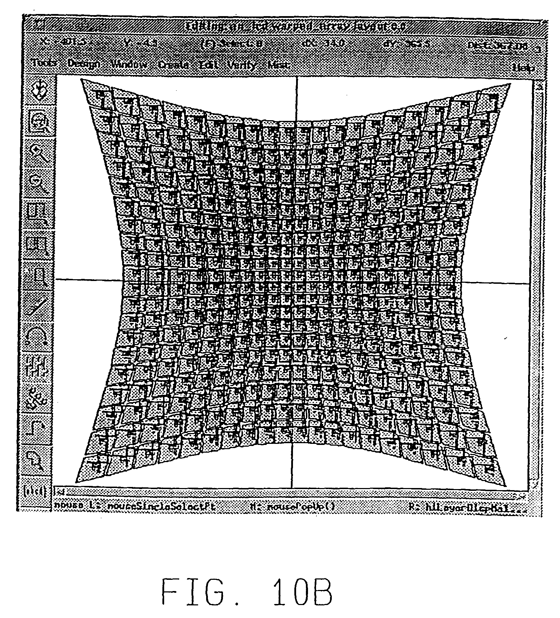

The optical distortion of an optical magnifier is characterized by an optical distortion function which can be determined by a ray tracing experiment. Generally the distortion function for a short-focal-length magnifier is radially symmetrical and monotonically increasing with the axial radius. After the distortion function of the magnifier is determined, the inverse function of the distortion function may be derived by, for example, a third order polynomial fit to the distortion function. The resultant inverse function for such magnifier may be expressed as

$$D^{-1}(r_i) = (r_i + kr_i^3)$$

where $D^{-1}(r_i)$ is the approximate inverse function of the distortion function, $r_i$ is the axial radius of a point on the magnifier and k is a constant of approximately 0.32. FIG. 10B shows a computer-displayed drawing depicting the inverse distortion function for a LEEP-type optical system.

To compensate for the distortion introduced by an optical system used to view a pixel display, the inverse function of the distortion function is used to position and scale the individual pixels of the display. Since the pixel array is very regular, albeit of peculiar and specific form, a silicon compiler may be written to implement a scaleable architecture, where a pixel array can be "auto-instanced and routed" with the specification of only a few parameters such as DISTORTION_FUNCTION, CHROMATIC_ABERRATION, ARRAY_WIDTH, and PACKING_DENSITY.

FIG. 10C shows the top-view of a fabricated pixel array designed in accordance of the present invention to compensate for typical short-focal-length magnifier distortion. The layout of this array was generated with a silicon compiler program which may be written to even compensate for the varying warped pixel capacitance by adjusting the size of the buried storage capacitor for each pixel. The compiler program used is written in C computer language and it provides complete pixel array layout in the CADENCE design tool language called SKILL.

The present invention features a diffraction-based color microdisplay and methods for manufacturing diffraction-based color microdisplays. A diffraction-based color display operates by illuminating an array of pixels, each including a diffraction grating element comprising one or more diffraction gratings, with light. Referring to FIG. 12, a light source (not shown) provides collimated white light 1010 to illuminate a pixel 1012. The pixel includes a diffraction grating element 1014 formed on a semiconductor substrate 1016 using a CMOS, BICMOS, NMOS, or other microcircuit process. The diffraction grating element 1014 comprises a triad of diffraction gratings 1014a-c. A rainbow pattern of light 1018a-c (i.e., a diffracted spectrum) is reflected from each grating 1014. The period of each grating is different, so that the diffracted spectrum for each grating is offset slightly relative to the other gratings in the triad. In other words, the angular direction of the diffracted spectrum differs for each grating. Thus, if each pixel triad is viewed from a single angle, the light diffracted from each grating of the triad appears as a different color.

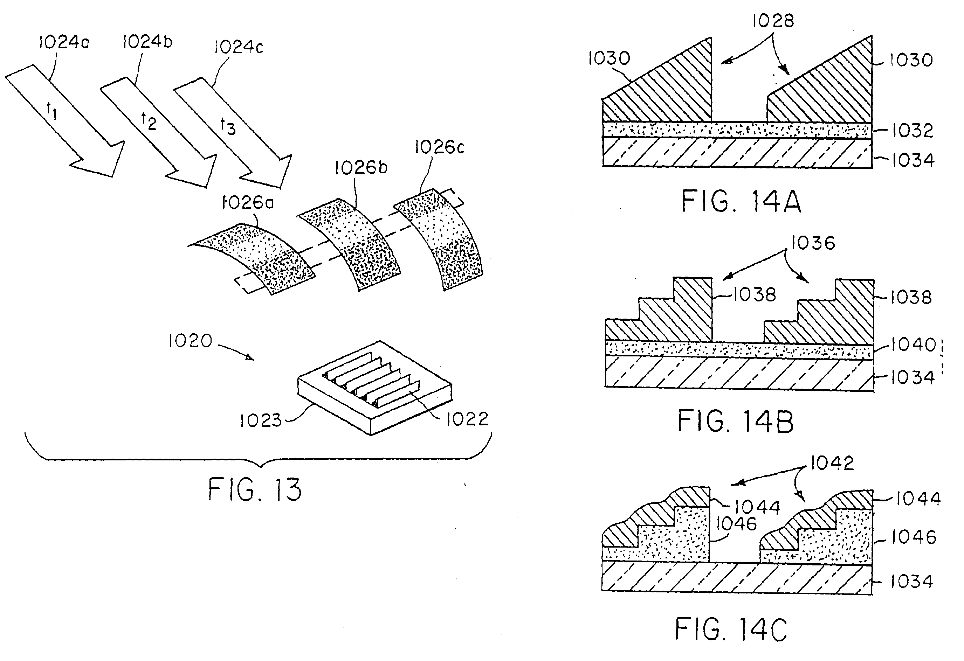

In another embodiment, shown in FIG. 13, a pixel 1020 comprises a single diffraction grating 1022 formed on a semiconductor substrate 1023. Three narrow band light sources (not shown) illuminate the pixel with collimated narrow band light beams 1024a-c in a sequential process. By way of example, the pixel is illuminated with a red illuminator at time $t_1$, blue illuminator at time $t_2$, and green illuminator at time $t_3$. Spectra 1026a-c are diffracted from or through the grating in response to the incident narrow band light beams. The single grating is configured so that each incident light beam from the precisely offset red, green and blue sequential illuminators are combined by the grating to diffract in the same direction. By viewing the diffracted beam, the pixel appears as a different color at time $t_1$, $t_2$ and $t_3$. When the red, green and blue illuminators are cycled at sufficiently high speed, the viewer perceives a single color which is the additive combination of the diffracted narrow band beams. In effect, the device acts as a color combiner which reduces glare and increases contrast.

Referring back to FIG. 12, there are three main criteria in the design of triad grating structures: period, duty-cycle, and the number of strips per gating. To understand how these can be optimized, a brief review of grating theory is provided.

A diffraction grating is a periodic structure which changes the wavefront of incident light through interference. Diffraction gratings can be designed to affect either the amplitude or the phase of incoming light, to deflect intensity maxima in particular directions. By varying the pitch, duty-cycle, and the number of strips each grating, the direction of the maxima can be varied. For a diffraction grating of $n$, ideally-narrow lines each separated by a distance $d$, the complex amplitude using the grating center as a phase reference is,

$$A(\phi,\delta) = A_o \frac{\sin(\frac{n\pi d}{\lambda}\sin\phi + \frac{n\delta}{2})}{\sin(\frac{nd}{\lambda}\sin\phi + \frac{\delta}{2})}$$

$$(1)$$

where

$$\delta = \frac{2\pi d}{\lambda}\sin\phi_o,$$

and $\varnothing_o$, is the fixed angle of incidence.

The orders, or diffraction maxima have equal spacing in $\sin\phi$, and occur when the numerator and denominator of the previous equation tend to zero together. This happens when

$$\frac{nd}{\lambda}\sin\phi + \frac{\delta}{2} = N\pi \qquad (2)$$

or when

$$\sin\phi = \frac{\delta\lambda}{2\pi d} + \frac{N\lambda}{d} \qquad (3)$$

where $N$ is the order number. So, $\delta$ is the phase shift per line caused by the angle of illumination, and affects the position of the orders. The order spacing, on the other hand,

$$(\sin\phi)_N - (\sin\phi)_{N-1} = \frac{\lambda}{d} \qquad (4)$$

is determined by the grating pitch $d$ and the wavelength of illumination.

When the effect of the each strip's width and hence the duty-cycle of the grating is considered, the diffraction pattern of the whole grating appears only in the directions in which the individual lines would diffract light. Thus, the diffraction pattern of the entire grating is the product of the intensity pattern of a single line with the intensity pattern for the ideal grating.

To determine the number of strips for each grating, the aperture distribution function (i.e., the extent of the grating) is convolved with the diffraction pattern from the last paragraph. The smaller the extent of the aperture function (i.e., the fewer strips in the grating), the greater the extent of the diffracted maxima. In other words, when more strips are added to a grating, the diffraction maxima width decreases, and the color bands in the triad become more distinct.

The general case involves three convolutions: the individual strip top-hat function; with the periodic grating impulse response function; with the top-hat function of the grating extent. The result is a narrow sinc function under a wide sinc function envelope. The product is a series of diffracted beams of finite width which decay in intensity with increasing order. After doing the convolution of a boxcar function with a periodic delta function, there should be at least nine strips in the grating structure to separate the primary color (e.g., red, blue, and green) wavelengths. This results in a tradeoff in resolution because each strip must be separated by at least a micron, meaning the minimum size of a single color pixel in a RGB triad is twenty-five microns in length. However, this allows more space for slightly larger high-voltage transistors used to drive the optically active materials.

The invention includes the recognition that various optimization techniques may be utilized to maximize the efficiency of the diffraction gratings for each primary color band. One technique is a "blazing." By way of background, the combination of individual strip patterns within the overall grating pattern can produce the effect of "missing orders". For instance, if a grating of pitch $d$ is composed of lines of width $w$, and $d/w$ is a rational fraction, then a zero of the line diffraction pattern will fall on a maximum of the grating pattern, and this order will not appear. Thus, it is possible to remove orders by choosing the duty-cycle relative to the pitch. Moreover, the grating can be designed so that most of the light goes into one order. These are called blazed gratings. The lines are ruled so each grating casts its diffracted spectrum in the direction of the desired order.

FIGs. 14A-14G illustrate various forms of blazed diffraction gratings. In FIG. 14A, a blazed diffraction grating 1028 is formed by patterning a metalization layer 1030. The layer 1030 is disposed on an oxide layer 1032 which is deposited on a semiconductor substrate 1034. FIG. 14B illustrates a blazed diffraction grating 1036 having a step profile. A metalization layer 1038 disposed on an oxide layer 1040 is step etched to produce the resulting profile. In FIG. 14C, a blazed diffraction grating 1042 is formed by depositing a metalization layer 1044 over an oxide layer 1046 etched or otherwise patterned to have a step (or sawtooth) profile. The oxide layer is deposited on the substrate 1034 and step etched.

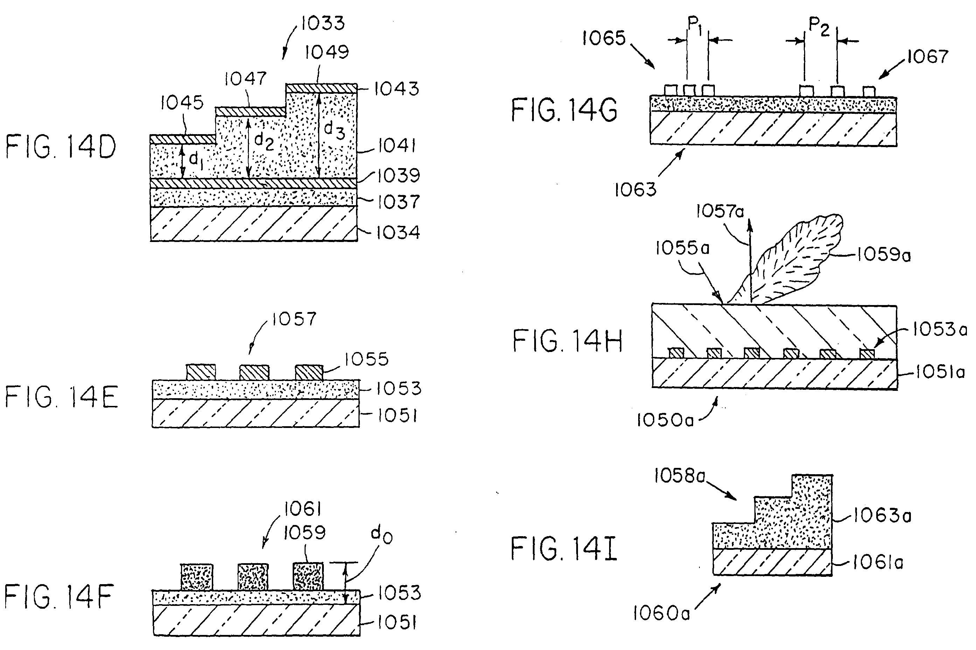

In FIG. 14D, a blazed diffraction grating triad 1033 is formed by depositing an oxide layer 1037 over the substrate 1034. The thickness ($d_1, d_2, d_3$) of the oxide layer 1041 between the top metalization layer 1043 (used to form the grating) and the underlying metalization layer 1039 (used as a rear reflector for a phase grating) is varied to optimize phase diffraction efficiency for the selected color (wavelength) for each individual grating 1045,1047,1049. In FIG. 14E, a blazed diffraction grating triad 1057 for a transmitted mode display includes an oxide layer 1053 formed over a transparent substrate 1051. A metalization layer 1055 is deposited over the oxide layer 1053 etched or otherwise patterned to form an intensity grating triad. In FIG. 14F, a blazed diffraction grating triad 1061 for a transmitted mode display includes an oxide layer 1053 formed over a transparent substrate 1051. Another oxide layer 1059 is deposited over the oxide layer 1053 and etched or otherwise patterned to form the grating triad. The thickness ($d_0$) of the two oxide layers is varied to optimize phase diffraction efficiency for each grating in the triad 1061.

It is noted that in FIGs. 14A-14F, the layer 1034 may be an absorber such as polysilicon to form an intensity grating of reflecting metal strips alternating with absorbing polysilicon strips. Alternatively, layer 1034 may be a metal to form a surface relief-type phase grating between the top two layers of metalization. It is also noted, for convenience, FIGs. 14A-14F depict only selected layers of the circuit and grating fabrication process.

It is noted that other forms of blazed diffraction gratings are within the scope of the invention. For example, a "virtual" blazing process may be used to provide a blazed diffraction grating. Virtual blazing involves adjusting the width and spacing of individual strips to maximize reflection for a single order.

Pitch optimization is another technique that may be utilized to maximize the efficiency of the diffraction gratings over the entire field of the display and to compensate for uncollimated light. A diffraction grating has a pitch $d$ which is related to the wavelength in the canonical grating equation:

$$\sin\phi = N\frac{\lambda}{d} \qquad (5)$$

where λ is the wavelength and N is the order number. It follows from equation (5) that pitch d can be tuned to maximize diffraction efficiency for each primary color band (or wavelength) independently.

In one example, shown in FIG. 14G, a display has a single uncollimated light source (not shown) adjacent to a pixel array 1063 having two pixel gratings 1065,1067 at different position which should produce the same color output (other gratings are contemplated but not shown). At different positions on the substrate, the illumination is incident from different angles. Thus, the grating pitch ($p_1$, $p_2$) varies across the substrate to compensate for the changing incident angle of the uncollimated light. This results in uniform color across the entire display area despite a lack of collimation.

FIG. 14H illustrates a display 1050a including diffraction gratings 1053a instead of reflective pixel electrodes. Incoming light 1055a and resulting diffracted light 1057a are shown. The gratings 1053a serve to displace a large portion of the unwanted back-scattered illumination 1059a in the OFF state away from the optical axis of the display, which is aligned along the first-order diffracted beam 1057a.

In FIG. 14I, a blazed diffraction grating triad 1058a for a transmitted mode display 1060a includes an oxide layer 1063a formed over a transparent substrate 1061a. The thickness of the oxide layer is varied to form a phase grating triad.

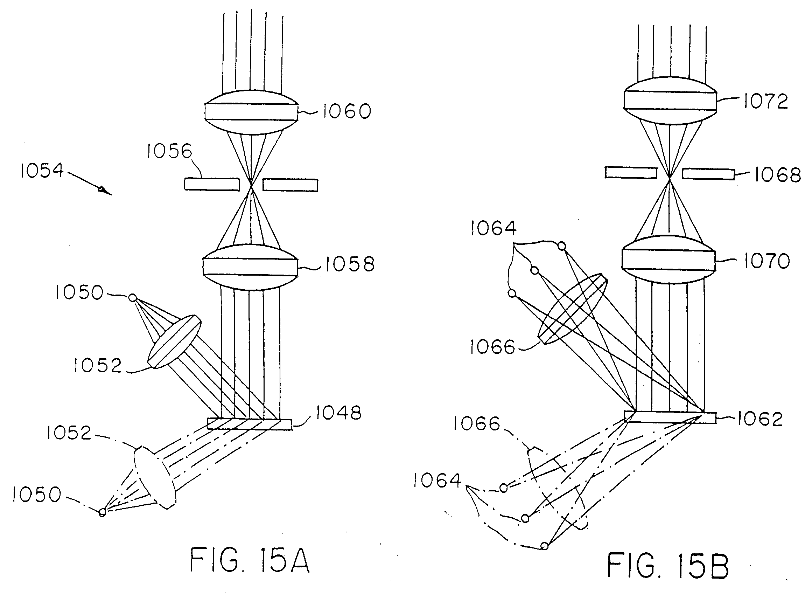

FIG. 15A illustrates the imaging system of a color generation device of the invention. An array of diffraction grating triads are disposed on a substrate 1048. A point source 1050 emits light that is collimated by a lens 1052. Based on the foregoing, the dispersive properties of gratings enable them to be used as color filters, where the dispersion relation is the canonical grating equation (equation 5). The imaging system 1054 includes a stop 1056 to accept only a small range of angles $\varnothing_o \pm \delta \varnothing$, so only the spectral range $\lambda_o \pm \delta \lambda$ is passed through the stop 1056. For each diffraction grating triad, three different grating pitches are provided such that the first-order reflected beams of three different wavelengths pass through the stop 1056. More specifically, a lens 1058 directs the reflected beams through the stop to a second lens 1060.

In one example, for a prototype microdisplay fabricated in accordance with the principles of the invention, the grating periods were rounded to the nearest tenth-micron to suit the fabrication process limitations. For each diffraction grating triad, the blue period was 2.0 microns, the green period was 2.3 microns, and the red period was 2.7 microns. It is noted that the ratio of the three periods is important, not the absolute numbers. Any three grating pitch values that preserve the ratios between the desired diffracted colors is appropriate for the diffraction color filter effect. The colors were chosen to match, and slightly improve upon, the NTSC specification. It is noted that other microdisplays can be readily fabricated in accordance with the known PAL, SECAM, KGB, VGA and SVGA specifications.

FIG. 15B illustrates the imaging system of another color generation device of the invention. An array of diffraction grating elements (with one or more gratings per element) are disposed on a substrate 1062. A plurality of point sources 1064 emit light that is collimated by a lens (or a system of lenses) 1066. A stop 1068 accepts only a small range of angles. For each diffraction grating element, the grating pitches are provided such that the first-order reflected beams of the different wavelengths pass through the stop 1068. A system of lenses 1070,1072 directs the reflected beams through the stop and out of the display for viewing.

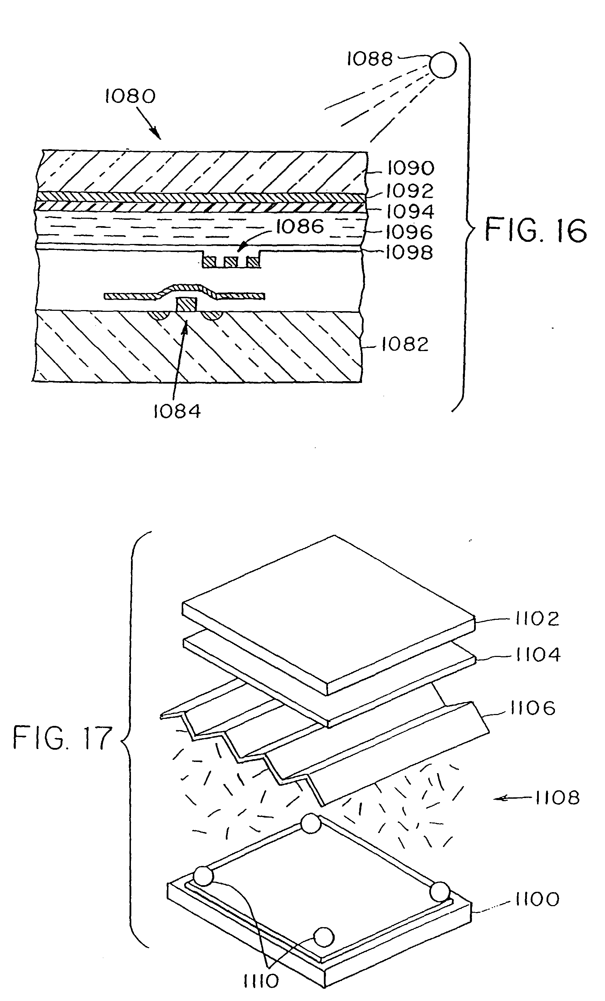

With reference to FIG. 16, a color microdisplays 1080 includes a semiconductor substrate 1082. Each pixel 1084 can based on a DRAM, SRAM, raster scan or any other array address and storage architecture with both column and row selects as well as either active or passive data storage circuitry. The data storage node of each pixel is connected to the pixel electrode on the top layer of metalization which is shaped into at least one grating. As shown, a triad 1086 of gratings is formed in the top layer of aluminum metalization during the microcircuit process. The optical efficiency is then only limited by the first-order diffraction efficiency of the gratings. The gratings 1086 are positioned to shield the transistor 1084 from illumination in order to avoid photocurrent which drains the charge stored at each pixel.

A source 1088 of light is disposed adjacent the structure to supply incident light to the diffraction grating elements. The source may provide collimated light or non-collimated light. Further, the source may include a white light emitter or multiple narrow band (e.g., red, green, and blue) emitters. The source may be incandescent, cold cathode, fluorescent, tri-band lamp fluorescent, or an LED. A cover plate 1090 is disposed has a layer of conductive material 1092 (e.g., ITO) on an inner surface adjacent an alignment layer 1094. The conductive material serves as an electrode for the pixel array. An optically active material 1096 (e.g., liquid crystal materials and known operating modes including TN, STN, ECB, PDLC, FLC, DHFLC, AFLC) is disposed between the substrate and the cover plate. An array of optical elements 1098 may be disposed adjacent the array of pixels for directing the colors for each pixel through the optically active material to the eye of the viewer.

Referring to FIG. 17, a process for fabricating a color microdisplay is shown. An array of reflection-mode pixels are formed on a semiconductor substrate 1100 (e.g., silicon) using a CMOS, BICMOS, NMOS, or other microcircuit process. More specifically, an array of diffraction grating elements (including one or more diffraction gratings) are formed on the substrate for each pixel (FIGs. 12, 13 and 14A-14G). The array of elements may be a planar array which is patterned in a layer of metalization deposited on the substrate during the microcircuit process. For each triad, the pitch of each diffraction grating may be optimized as a function of the angle of incident light, such that each pixel diffracts the proper color into the viewing optics (FIGs. 15A-15B). Further, each grating may be blazed such that most of the reflected light is concentrated in a single order (FIGs. 14A-14G).

The method also includes positioning a source of light adjacent to the pixel array to supply incident light to the diffraction grating triads (FIG. 16). A cover plate 1102 is disposed above the substrate and has a layer of conductive material 1104, such as indium tin oxide (ITO), on a surface of the cover plate opposite the substrate. An optional alignment layer 1106 may be formed adjacent to the layer of conductive material. An optically active material 1108, such as liquid crystal, electrochromic or active semiconductor materials, is disposed between the substrate and the cover plate. Spacers 1110 are positoned on the substrate.

The method also includes forming an array of driving and addressing circuitry on the substrate. The driving and addressing circuitry may be based on a on a DRAM, SRAM, raster scan or any other array address and storage architecture and provides column and row selection for activating each pixel. An array of optical elements is formed adjacent the array of pixels for directing the colors for each pixel through the optically active material to the eye of the viewer.

Intensity Modulating Materials

Color microdisplays incorporating the principles of the invention are designed to support several different modes of operation using various optical intensity modulating materials, as the color generation mechanism is independent of the intensity modulation. For example, where resolution and frame rate are critical, fast ferroelectric or nematic materials and modes in thin gapped cells are appropriate.

Other modes of operation using polymer dispersed or scattering-type liquid crystals are well suited to slower or lower resolution applications. This configuration does not require polarizes or surface preparation for liquid crystal alignment. This mode is also extremely robust in the face of exposed grating structures and other problems with surface contamination or general lack of planarity. Assembly of the PDLC cells is also greatly simplified as there is no back-fill after sealing required since the sealing and filling processes are one in the same. Additionally, the scattering-to-transparent mode of operation is quite robust with respect to cell thickness variation and contamination. Thin gapped electronically controlled birefringence modes are appropriate for a wide range of applications in combination with microdisplay color diffraction grating filters and combiners. The reflected mode of operation boosted contrast ratios considerably with two passes through the PDLC materials effectively doubling the effective scattering for a given driving voltage.

The reflected mode intensity grating is fabricated with a single level of metalization over the polysilicon line-select bus with the intent of having the lowest reflectivity background and finest grating pitch possible. The transmitted mode intensity grating is fabricated with a single layer of metalization over a transparent area of the substrate.

The transmitted mode phase grating is fabricated using varying thicknesses of oxide which leads to a relative phase lag. This grating structure has the potential to be much more efficient than the intensity-based grating if the relative phase lag of the varied oxide thicknesses is roughly one-half the wavelength of light to be diffracted.

Alternative and additional description of the present invention is contained in the attached Appendix which is intended to be a part of specification of this patent application.

While the invention has been particularly shown and described with reference to specific preferred embodiments, it should be understood by those skilled in the art that various changes in form and detail may be made therein without departing from the spirit and scope of the invention as defined by the claims.

APPENDIX

1. <u>Monochrome Microdisplays</u>

   1.1 <u>VLSI Design</u>

   Once a reasonable understanding of the physical properties of liquid crystal materials and their surface properties was established, the major part of the microdisplay design effort lay in the development of the CMOS active backplane which would modulate the orientation of the liquid crystal molecules. In order to affect the optical reflectivity of a liquid crystal pixel, one must control the local orientation of the uni-axial molecules above it. A microdisplay is composed of an array of tiny reflective aluminum pixels coated with liquid crystal material. It is then sealed with a glass cover which has been coated with a transparent common electrode. The microdisplay functions by storing charge on each pixel electrode thus creating a potential difference with respect to the indium tin oxide common electrode on the coverglass. This generates a local electric field which tends to orient the liquid crystal molecules. The more charge that is written to a pixel's storage electrode, the greater the electric field above it. A stronger field causes tighter liquid crystal alignment which leads in turn to greater optical activity. To modulate the optical activity of a liquid crystal cell, specific amounts of charge must be stored on each of the display pixels. This VLSI design effort has solved the problem on a micron scale.

   There are four main components of the CMOS microdisplay chip: the pixel design, the design of the pixel addressing structure, the I/O structure including the video input decoding and the pads for transferring data into and out of the microdisplay chip.

## 1.2   Pixel Architectures

The primary components of each pixel are an active element to allow data storage to that pixel, a memory element, e.g., a capacitor-type DRAM cell or a static SRAM cell which can store a pixel's data (charge) between frame refresh cycles, and a reflective electrode which is connected to the charge storage device.

### 1.2.1   Fill-factor

The fill-factor issue is a serious problem for today's generation of flat-panel displays, but is not so terrible for the reflected-mode microdisplays.  Fill factor is a percentage measure of the optically active display area in proportion to the total area of the display, and therefore has a direct influence on optical efficiency.  Since each pixel must be electrically isolated from its neighbors, there is a minimum spacing between pixels as established in the layout design rules for the fabrication process technology.  Microdisplays don't suffer as badly from this minimum spacing requirement because the active pixel address circuitry, the storage capacitor, and the address buses can all be placed beneath the reflective electrode.  While this multi-layer arrangement introduces some other problems in pixel planarity as discussed below, the fill factor is limited only by the minimum spacing of the top level of metal used for the reflecting electrode.  The first 500x400 pixel microdisplay with 15 micron wide pixels has a fill factor of 75%.  The 800x600 pixel monochrome microdisplay was fabricated using a finer resolution process and achieved a fill factor of 81%.

### 1.2.2   Data Storage

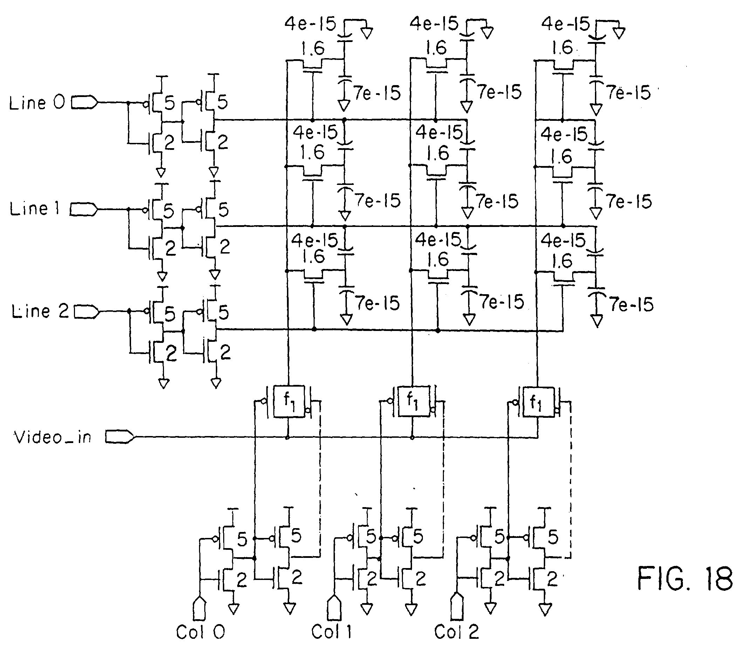

Once a pixel has received its data, it must retain that data until its next refresh.  The analog pixel is a select-line gated pass transistor connected to a capacitor as

shown in FIG. 18, which shows a simplified schematic diagram of drive electronics and pixel storage structure. As shown, each pixel has an effective storage capacitance composed of the liquid crystal cell itself, combined with an additional capacitor coupled to the previous line-select bus. This arrangement takes advantage of the fact that only one line is addressed at a time, with all the others being held at ground. When a pixel's line is selected it turns on the pass transistor, and data is written from the column address bus onto the storage capacitor.

The analog pixel has the advantage of few components and a small layout area requirement. This design can also store analog data and has intrinsic gray-scale capability. But as with other analog systems, the DRAM pixel lacks any kind of noise margin, and is susceptible to cross-talk through the parasitic capacitances in the pass transistor and capacitive coupling to neighboring pixels. Also, as a passive storage device, the analog pixel has no mechanism to preserve data over long periods in the face of leakage current, which turns out to be a serious weakness. An additional problem with the single-transistor design is that with only a single active device in each pixel pass gate, the signal suffers a transistor-threshold drop in voltage (in an NWELL process, the native n-channel transistor is used as the pixel pass-gate). This is not so much of an issue for the ferroelectric devices, but is critical for the PDLC drivers which need every volt to switch the material more quickly.

The other data storage alternative is a standard digital SRAM cell composed of between six and eight transistors. Operating in this binary mode provides both noise immunity and static data storage. However, the gray-scale ability disappears unless time-multiplexed pixel data is used. The resolution of

the display also decreases, as each pixel must now be large enough to contain more components. The very high resolution displays which push the lithography limits of current process technology will mirror the trends in memory technology, and will likely be DRAM-based.

### 1.2.3 Data Storage and Photoelectric Leakage Current

The time constant for data storage in the high-resolution DRAM microdisplays depends on the size of the storage capacitor and the amount of leakage current, both through the pass transistor and due to the photoelectric effect. Unfortunately, the largest storage capacitance that can be fabricated in a standard CMOS chip is the gate capacitance of a transistor. But this is precisely the part of the pixel which is most sensitive to leakage current due to the photoelectric effect. In order to see the display, a fair amount of light must illuminate it. This generates electron-hole pairs which cause leakage currents across the p-n junctions at the edges of the transistor active areas. This means that the best storage capacitor also has the highest leakage current. A typical value for a storage capacitor in a 10 micron pixel is around 38 fF.

One possible solution is to design substrate charge collectors to absorb some of the photoelectric carriers in the substrate. This idea, however, requires an additional bus to bring a substrate power connection to each pixel, and would eliminate a large amount of area that could otherwise be used to make a bigger storage capacitor.

The final pixel design for the 500x400 DRAM microdisplay omitted a transistor/thin-oxide storage capacitor. In spite of the decrease in capacitance that came from using the capacitance of the liquid crystal sandwich alone instead of a transistor gate, there was less leakage current and a 80 ms time constant. Additionally, the top layer metal electrode was placed on top of

the active pass-transistor area to shield it from light as much as possible. The resulting cell had a data storage time constant that varied from 500 microseconds to 10 milliseconds depending on the intensity of the viewing illumination. A typical illumination setting for a heads-up display resulted in a pixel persistence of 13 milliseconds for the 500x400 display.

The latest pixel architecture seen on the 800x600 pixel microdisplay uses the polysilicon and metal layers of newer fabrication processes to form extra storage capacitors with no active circuit area. This design resulted in much less leakage current and exhibited up to 42 fF of storage capacitance. As an additional safety measure, the top layers of metal were staggered and overlapped like roofing shingles to form an optical baffle so that even less light would reach the pass transistor. This aluminum optical baffle had the side effects of slightly increasing the display's fill-factor, and increasing the pixel cross-talk.

### 1.2.4    Parasitic Capacitance and Cross-talk

Particularly in the analog DRAM microdisplay, cross-talk is a problem. The source-drain capacitance of the pass transistor is about one sixth the capacitance of the liquid crystal cell without any storage capacitor (in the 500x400 microdisplay). This means that after data is written to a line of pixels, and that line-select bus is set to zero volts, with the following line-select turned on, the data that was just written degrades by 16 percent. This problem was corrected in the more recent design with the addition of a larger capacitor to result in a cross-talk degradation of less than 3%, a figure well under 6 bits of resolution.

Another problem was the lateral coupling capacitance between neighboring pixels. This causes the data written to one pixel to bias the data written to all of the neighboring pixels.

These parasitics only get worse as finer pitch fabrication processes decrease the inter-pixel separation. The addition of aluminum light baffles only makes this problem worse. The best solution to-date was to make the largest storage capacitor possible so that it dominated the parasitic effects.

1.2.5    AC Coupling to Liquid Crystal Materials

A problem arose from impurities in the liquid crystal materials. Many of these impurities were ionic, and when a DC field was applied from a pixel electrode to the common ground on the coverglass, these ions collected over the surfaces of the pixel electrode and coverglass ground. These accumulated ions then reduced the field strength across the cell gap and thus reduced the net optical activity of the display. Over time, the display degraded rather rapidly.

The ionic contaminants only collected against an insulating surface. If the ions were allowed to actually come in direct contact with the pixel electrodes, they were neutralized by the stored charge there. Two things, however, stood in the way. First, the CMOS chips were typically passivated with an insulating layer of Silicon-nitride and $SiO_x$. Second, the alignment layer used to force an equilibrium director configuration the liquid crystal cell was also typically either an additional layer of oxide (see below under Liquid Crystal Surface Alignment) or a polyimide, both of which were good insulators. This was actually not so bad. Since there was an additional seal over the device with the liquid crystal material and the glass cover, as long as the liquid crystal material was benign to the CMOS process, the process passivation was eliminated altogether, and the silicon was protected by the liquid crystal laminate. Newer alignment materials which are conductive are also under development.

The 500x400 digital SRAM microdisplay incorporates an innovation which retains the data as both the common electrode and the power supply rails are swapped at the same time. Instead of connecting the SRAM cell's cross-coupled inverters directly to the liquid crystal electrode, the inverters gate the power buses to the liquid crystal drive electrode. When the power rails are swapped along with the coverglass common ground, the data in the array is retained. This also allows the AC liquid crystal drive frequency to be adjusted independently of the frame update rate.

The 800x600 microdisplay based on ferroelectric materials used several frame inversion modes depending on the material. The surface-stabilized display used a single polarity drive scheme with a clearing pulse. The deformed helix material display used a symmetric voltage drive scheme around a constant common electrode voltage. The surface stabilized display showed better contrast (up to 230:1), though the deformed helix display (with contrast as high as 26:1) showed gray-scale.

### 1.2.6 Reflectivity

The top electrode of each pixel must be as reflective as possible in the case of the nematic liquid crystal displays. As most metals in standard fabrication processes are alloyed with silicon and cooper to help prevent eletro-migration and spiking, the texture of the aluminum layers is somewhat grainy and not as reflective as a more pure metal elec⁺rode would be. A customized CMOS fabrication process would be required to gain the optimum reflectivity.

Some of the polymer dispersed liquid crystal materials are exceptions to the need for highly reflective pixel electrodes. These materials require a scattering electrode to complement the scattering effect of the dispersed liquid crystal droplets. These scattering pixels are best formed out of polysilicon.

Adding additional blackening textures such as dyed anodization of the aluminum reflectors may be added.

### 1.2.7    Planarity

In order for the liquid crystal materials to align properly on the surface of a chip, the surface must have a uniform planar topography. Optical performance also improves with surface smoothness. The newer 800x600 monochrome microdisplay fabricated in the HP26B 0.8 micron Hewlett Packard line was found to be quite planar, with surface profile variations on the order of 100 angstroms.

### 1.2.8    Passivation and Process Repeatability

A final issue with the passivation layer was that the overglass etch varied from one wafer run to the next. On otherwise identical chips, the cut over each pixel varied form 5 to 15 microns across. The best microdisplay results so far use a spun polyimide alignment layer. In the early microdisplays this was mostly due to the hole filling effect of the spun layer. Part of the contrast difficulties stemmed from the problems of wetting this inhomogenous surface, and maintaining coverage of the surface at low spin velocities. Although a thicker spun alignment layer might serve a better planarization purpose in the future, that option was not open in the fabrication of early microdisplays from packages substrates because a meniscus formed a chip edges when the spinner was operated at velocities lower than 3600 RPMs. Later prototypes were spun using shims to eliminate the bead. It is now clear that partial passivation cuts over each pixel were a bad idea for twisted nematic operating modes. The latest tests indicate that superior performance and display lifetimes was obtained from non-passivated die, where newer process technologies resulted in more planar die to begin with.

1.2.9    <u>Spacers</u>

The spacing between the substrate and the coverglass was a critical parameter, particularly in the ferroelectric displays which required better than a 0.2 $\mu$m thickness variation tolerance across 1 to 2 $\mu$m cell-gaps to avoid chromatic effects. And while the PDLC devices allowed much looser tolerances, where contrast varied only slightly, and brightness variations were acceptable with up to 8% variations across 8 micron gaps. This is a much more reasonable tolerance for manufacture in quantity.

The issue of how to control the spacing becomes more complex as the devices get smaller and the spacers become the same size as the pixels. Simple micro-sphere dispersion schemes wipe-out entire pixels. Supports lithographically built into the edges of the die remove this constraint from the pixel design, though slightly thicker glass is required to avoid deflection in the center.

1.3    <u>The Final Pixel Designs</u>

Five different prototype monochrome microdisplay chips were fabricated to test different aspects of the technology using the MOSIS chip brokerage. Each of these first four die were designed in a 2.0 micron process to keep prototyping costs at a minimum. Later prototypes were fabricated using the 0.8 micron Hewlett Packard process for higher resolution devices.

One chip was a large grating of aluminum strips that was intended as a test pattern to experiment with liquid crystal materials and chip surface properties. It was intended to assess the possibilities of using diffraction for holographic lens and grating construction as well as diffraction-based color pixels. This chip was a set of grated metal lines with every tenth strip connected to an output pad (so the effective period of the grating could be modulated). All of the mechanical and

optical tests began on this test array which allowed debugging of the optical and surface properties independent of VLSI electronics design effort.

Another prototype chip was a 500x400 array of DRAM cells with no storage capacitor other than the capacitance of the liquid crystal cell itself. The pixel address structure was a two-dimensional shift-register which was designed to work as a CRT raster display. The line-select shift-register array was clocked to select a single row of pixels. The column-select shift-register array gated a video input signal onto a single column of pixels so that the pixel at the intersection of the selected row and column had data written to the storage capacitor.

Another prototype microdisplay was similar to the previous one differing only in the pixel design. Each pixel in this case was a binary SRAM cell modified with a provision to swap the power rails and common electrode of the coverglass to provide AC material coupling compensation for the ionic charge accumulation problem.

The latest monochrome microdisplay was based on an 800x600 array of 10x10 micron pixels with an 81% fill factor. Each pixel included a storage capacitor, light baffle, two active transistors (for column and line-select), and a reflecting electrode. The die were fabricated using the Hewlett Packard 26B 0.8 micron CMOS line and use chip topography for the coverglass standoffs and LC device spacers. The device was operated in reflected mode, and the pixel capacitor photo-current discharge time-constant was negligibly high, as the pixel electrodes were composed of three layers of metalization baffled like roofing shingles.

## 1.4   The Pixel Addressing Structure

There were two primary designs for sending data to each pixel, either serial data input and clocked shift registers to emulate CRT operation, or memory address decoders with parallel writes to a "word" of pixels.  In each case, the major obstacle was to develop an address structure of a fine pitch to match the very high resolution of the DRAM and SRAM pixels. Shielding form the photoelectric effect in the form of top level metal sheets covering the shift register circuitry were not included in the first four prototypes, but would have significantly improved the performance of the early devices.

The first three prototypes were based on a set of row and column shift registers.  The inputs to the devices consisted of:

- Analog video input line
- Horizontal pixel clock
- Vertical line clock
- horizontal reset
- Vertical reset
- Power
- Ground

The horizontal pixel clock selects which column of pixels to send video data to.  It asserts each column in turn, and is reset to the first pixel by the horizontal reset signal.  The vertical line clock which selects which row of pixels is to receive data, cycles once for each complete row of pixels, and is advanced simultaneously with the horizontal reset signal. The vertical reset signal which begins writing a new frame resets the row-select shift registers to the first pixel.

Each shift register stage was composed of a pseudo-two-phase clocked shift register.  This design used four clocks total, two phases to each shift register array.  Future

designs are underway for shift registers which use only single clock phases in order to further reduce the I/O pin count and incidentally simplify the register layout. The main problem in this design, particularly without the optical shielding, was that the only select-data storage mechanism between shift-register stages was the gate capacitance on the next shift-register stage. There was no refresh mechanism to compensate for the photoelectronic leakage current, and beyond a certain level of illumination intensity, the select data would vanish before the next line was clocked. Testing at higher intensity levels was performed by simply shielding the edge of the microdisplay chip with razor-blade edges.

This serial shift register scheme was originally chosen so that the device would mimic the operation of a television of CRT with signals analogous to video input, vertical and horizontal retraces. The clocked serial input raster scan design was also for the purpose of keeping the I/O pin count as low as possible. This was a very useful design feature when the coverglass had to be installed without dislodging the bond wires on the CMOS package. This assembly difficulty will no longer influence designs, as the assembly method will migrate to wafer-scale lamination of the liquid-crystal materials.

Eventual serial address designs will most likely integrate the video-synch decoding circuitry directly on the chip so that only three inputs will be required, power, ground, and composite video. Additional parallelization of the column addressing is also a simple modification that would substantially increase the frame rate. With the further incorporation of on-chip radios, a completely wireless and portable device will result.

The latest 800x600 pixel microdisplay has an address structure composed of a more standard (as far as the microprocessor industry goes) memory decoder. The microdisplay

then becomes an electronic-write/optical-read memory chip with a photo-active layer on top. This random access scheme is the easiest to interface as the design can mimic any one of the most commonly used memory chip pin-outs. Data can be written to any pixel in any order, so that barring mandatory refresh cycles, only changing pixels need to be updated on successive frames. This incremental update strategy along with the integration of the display and microprocessor may very well be critical issues at extreme resolutions of three-dimensional data where I/O bandwidth becomes a bottleneck for data display.

2. Color Microdisplays.

2.1 Materials.

The color microdisplays described herein are designed to support several different modes of operation using various liquid crystal materials, as the color generation mechanism is independent of the intensity modulation. For applications where resolution and frame rate were critical, ferroelectric materials such as BDH SCE-13 performed poorly in the surface stabilized configuration with 1.2 micron cell gaps. This was primarily due to the effect of the exposed grating surface structure and its effect on the alignment of the liquid crystal materials. The newer experimental ferroelectrics supplied by Hoffman La Roche were used in the deformed-helix mode and switched well with much higher contrast (better than 25-to-one), and quickly at 1.2 volts per micron in 2.5 micron cell gaps. There were some drawbacks to ferroelectric modes, however, including the optical efficiency penalty due to the required polarizers, as well as the required precision in cell gap uniformity for achromatic intensity modulation.

In an effort to improve the brightness of the new color microdisplays, another mode of operation using polymer dispersed liquid crystals (PDLC) was tested. This configuration required

neither polarizers, nor surface preparation for liquid crystal alignment. This mode was also extremely robust in the face of exposed grating structures and other problems with surface contamination or general lack of planarity. Assembly of the PDLC cells was also greatly simplified as there was no back-fill after sealing required since the sealing and filling processes were one-in-the-same. Additionally, the scattering-to-transparent mode of operation was quite robust with respect to cell thickness variation and contamination. The TL-205 to TL-215 series of materials from BDH exhibited switching thresholds from 0.7 to 3.2 volts per micron, but required rather thicker cell gaps ranging from 6 to 12 microns to achieve acceptable contrast ratios.

While the reflected mode of operation boosted contrast ratios considerably with two trips through the PDLC material effectively doubling the effective scattering for a given driving voltage, switching the materials with the silicon backplane operating at 5 volts was extremely slow, generating time constraints greater than 120 milliseconds, even with the too-thin cells which lacked contrast.

2.2 Results.

Three different color microdisplay chips were fabricated and a fourth chip has been designed and is being fabricated. The first die tested fourteen different pixel architectures in which pixel size, optical baffles, storage capacitors, passivation cuts, and shielding electrodes were varied. The pixel architectures which performed best were those with the greatest degree of optical shielding, the grating structures on the top layer of metalization, and no shield electrodes. Two more color microdisplays have been fabricated and tested, one with an intensity grating structure, and one configured as a phase grating.

The intensity grating was fabricated with a single level of metalization over the polysilicon line-select bus with the intent of having the lowest reflectivity background and finest grating pitch possible. Otherwise, the driver and pixel design was similar to the monochrome microdisplays discussed in detail above.

The phase grating die was fabricated on the second layer of metalization with a shield layer of METAL1 between the grating and the pixel circuitry. This shield grating also acted as a rear reflector in which the distance between the two layers of metalization, the METAL1 backing to the METAL2 grating led to a relative phase lag. This grating structure had the potential to be much more efficient than the intensity-based grating if the intra-metal spacing was roughly one-quarter the wavelength of light to be diffracted.

In all cases, the frame update rate was limited by the liquid crystal switching delay. Two different materials and operating modes were found to be the most appropriate for the color microdisplays. As with the monochrome devices, the ferroelectric materials switched in 70 microseconds or less, but the absolute brightness was limited by the polarizers in addition to the color filtering effects of the gratings. The PDLC materials were then tested in an effort to increase the brightness of the displays.

To compensate for the rather high switching thresholds and slow transitions of the PDLC materials in devices, special floating-gate transistor layout techniques were used to fabricate high-voltage test-structures in the standard 5 volt CMOS process. The higher drive voltages would allow thicker cells with increased contrast from the scattering effect, and much faster switching. At the same time, these layout

techniques would not require CMOS process changes, so the manufacture of the silicon die remained completely standard.

3. Silicon Compilers for Microdisplays

Because of the considerable investment in CMOS design tools to date, there is already a significant repertoire of design utilities that can be immediately applied to the fabrication of microdisplays. The design requirements for this type of display system are quite different from those of similar spatial light modulators that are under development for optical computing applications. As a result, many new criteria for display optimization must be tested. A rapid technology transfer form standard CMOS foundries and CAD tools will enable a significantly accelerated development life-cycle. One of the most powerful paradigms in CMOS fabrication technology is the use of silicon compilers to automate VLSI design procedures. This technology has now been applied to the BLSI microdisplays. This section describes several developments that followed immediately from the application of current CMOS layout compiler techniques and tools.

3.1 Distortion Compensation

One solution to distortion that was investigated in this research project was to develop a tool that would use the automated layout of a VLSI pixel array to compensate for optical distortions and aberrations. Ray tracing experiments through actual optics can generate a distortion function which is monotonically increasing with radius from the optical axis. Therefore, there exists an inverse function which can negate this nonlinear distortion. A third-order polynomial fit to the distortion function data provides a good approximation to the inverse function. This radially symmetric function is then used to position and scale the individual pixels of the display. Since the array is very regular, albeit of peculiar and specific form, a silicon compiler was written to implement a scalable architecture, where multi-sized chips can be "auto-instanced and routed" with the late-binding specification of only a few parameters such as DISTORTION_FUNCTION, CHROMATIC_ABBERATION, ARRAY_WIDTH, PACKING_DENSITY, and so forth. The current microdisplay compiler even compensates for the varying warped pixel capacitances by adjusting the size of the buried storage capacitor for each pixel. The microdisplay compiler was written in C and outputs complete pixel arrays in the CADENCE design tool language called SKILL.

### 3.2 Anti-Aliasing With Pixel Jitter

Another design problem specific to displays as opposed to spatial light modulators for optical computing, has been that of image aliasing. The finite pixilation of an image typically resulted in moiré` patterns in regular arrays. Several products have addressed this problem. The implementation of the microdisplay compiler has led to a solution which requires absolutely no extra computation hardware or run-time overhead. The compiler perturbs the position of each pixel by a small random amount in a random direction. This subtle breaking of symmetry and regularity greatly decreases alisasing effects at little cost.

### 3.3 Super-pixels

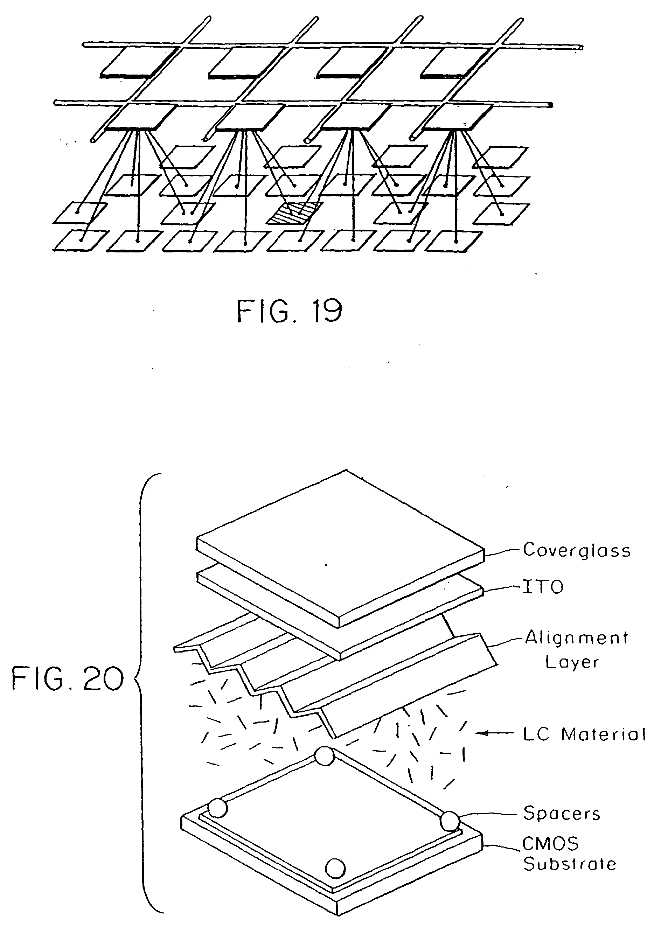

When lower resolution images (e.g., NTSC video) are magnified to fill large fields of view as in the virtual eyeglass application, each pixel becomes rather large and obvious. There is an elegant solution using the modularity of modern VLSI layout tools and the microdisplay compiler. The solution involves replacing each pixel cell in the image array with a group of pixels. Each new group of pixels consists of one central pixel connected to the line-drive and pixel data-buses as before, surrounded by a group of sub-pixels which

interpolate between neighboring central pixels (see FIG. 19).
FIG. 19 is a schematic diagram which illustrates a method of
data generation using superpixels. Each addressable pixel has
six neighbors whose electrode voltages are set to interpolate
between the addressed pixels. The inter-pixel interpolation
need not be linear. These sub-pixel interpolators can be
modified to perform threshold interpolation for maintaining
image discontinuities, or perhaps used to detect edges or
otherwise perform local image processing convolutions. This
feature is implicitly designed into the microdisplay compiler as
the only change required is the substitution of more complex
pixel layouts into the same compiler structure for the pixel
cell.

### 3.4 Integral Single-chip Computing Displays

The purpose of the prototype microdisplays was to
experiment with liquid crystal-on-silicon technology and expose
the fabrication and manufacturing difficulties of developing
this new display technology. The level of integration with
computing circuitry was fairly modest, being limited to drive
and address circuitry and test structures at the die edges. The
substrate used for the microdisplays is just that which is
common to the microprocessor industry. The current microdisplay
pixel driver designs demand very little in terms of silicon
real-estate, leaving considerable room for the incorporation of
additional computing circuitry. With hardly any changes to
either microprocessor design, or microdisplay layout, both
computation and display systems could be integrated on a single
chip. Since it is a simple matter to create a nicely
modularized design with current silicon compiler technology,
arbitrary changes to individual components like the pixel design
or line driver circuitry are incorporated with very low
development overhead. The notion of integrated computation and

display capability is then easily extendible to processor-per-pixel schemes for performing highly parallel image filtering or classification algorithms with a mere interchange of the pixel module design.

### 3.5 Chromatic Aberration Compensation

The final aspect of the microdisplay compiler is compensation for chromatic aberration. This is the effect of the dispersion of light in glass. Different wavelengths experience different indices of refraction, and therefore focus in different places. This aberration is typically corrected by complimentary lenses of positive and negative power with different disperion values to cancel each other's aberration. Minor color correction will become possible with the fabrication of color microdisplays based on RGB triads of pixels. Each color pixel of a triad can be independently placed so as to account for its chromatic aberration. The problem is that the correction function is purely radial, and the pixels are rectangular (or roughly quadrilateral in the case of a pre-warped display layout). Since the pixels have a discrete size, there will be aliasing error in the color tiling. A dithering algorithm can diffuse the color error due to placement error by jittering the positions of neighboring pixels.

### 4. Microdisplay Assembly

This section describes in detail one method of assembling one of the microdisplay devices. The single most pervasive theme in the whole assembly process is that of cleanliness. The devices under construction all had features on the micron scale. Even the tiniest speck of dust can likely destroy a pixel, disrupt liquid crystal alignment for 100 microns, or worse yet, short the device completely.

Cleaning occurred at or between every step of the process, so for convenience all of the cleaning techniques employed will

be summarized at the beginning, and then each assembly step will be detailed in turn.

Referring to FIG. 20; which depicts the general approach to microdisplay assembly with cover, liquid crystal material, spacers, surface preparations and silicon substrate; the general procedure for assembling a microdisplay device, once the CMOS backplane had been designed and fabricated, was as follows:

- Prepare the surface of the CMOS chip for liquid crystal alignment.

- Deposit transparent conductor on the inside coverglass surface for the common ground contact.

- Prepare the coverglass surface for liquid crystal alignment.

- Apply spaces to either the substrate or coverglass.

- Bond the coverglass to the substrate.

- Fill the device with liquid crystal material.

- Seal the fill hole.

- Anneal the LC material to remove disinclination defects.

4.1  Device and Substrate Cleaning

The weapons in the microdisplay cleaning arsenal ranged from mechanical brushing, to chemical rinsing, to ultrasonic baths, and finally in extremely stubborn cases, plasma etching. All of the substrates were initially subjected to an ultrasonic bath/RCA cleaning (the industry standard mix of 70% de-ionized water, 15% hydrogen peroxide and 15% Ammonium hydroxide), and were then rinsed with deionized water and methanol. This served to remove most large particles and organic contaminants. One series of chips from the ORBIT foundry however, suffered severe adhesion problems during later surface preparation steps. It was necessary in that case to etch the chips in an oxygen plasma for two minutes to remove the

surface oxide. Afterwards the surface treatments adhered quite well.

Between each step, save where the acetone would attack un-cured adhesives or polyimides, both the substrate and the cover were rinsed with acetone, trichloro-ethylene, and methanol, and finally blown dry with a filtered nitrogen gun. Even with these precautions, shorts due to contaminants were common in our rather dirty experiment environment.

### 4.2 The Common Electrode

The goal of this step was to make an electrode which had good conductivity, was transparent, had appropriate surface chemistry, and was planar. The two main choices were either evaporation or sputtering of indium-tin-oxide [ITO] or thin layers of chromium and gold. After considerable experimentation, the best choice seemed to be an 800 angstrom layer of sputtered ITO. Polished glass coated with high quality (low resistivity) ITO films from Donnely Films Inc. were the primary source of coated glass in larger quantities.

### 4.3 Liquid Crystal Alignment Layers and Surface Coatings

The purpose of the surface coatings on both the substrate and the glass cover was to cause liquid crystal molecules in contact with that surface to align in a single desired direction. There is still a considerable amount of research and speculation into the ultimate physical basis for the preferred alignment directions given particular surface energy, or mechanical corrugations and surface impurities, or else some combination of the two effects. In either case there are two basic methods for establishing this directional bias on surfaces.

The first, and most widely used method in industry today, is the "rubbing" method. After the surface in question was cleaned, a thin coating of adhesion promoter was spun on,

followed by a layer of some polymer or polyimide. The polyimide was then cured, and rubbed with a textured cloth. A good choice for the cloth was standard velvet available in most fabric retail stores. Un-dyed cloth worked best, but was hard to find. Linen or white colors performed best, but even black velvet worked. The velvet material was selected from the center of the bolts, and was handled only with gloves in order to prevent the accumulation of oily contaminants from skin contact. Cloth treatments and coatings such as Scotch-Guard which severely altered the surface chemistry of the rubbed surfaces were avoided as they gave unpredictable results. Samples of newer experimental version of alignment polymers which were specifically designed for active-matrix displays were supplied by Nissan Chemicals. These newer materials were found to have much better surface adhesion properties as well as higher resistivities for longer voltage holding ratios.

Almost anything done to the surface, from varied polyimide curing schedules, to altered duration and pressure of rubbing, changed the pre-tilt angle of the liquid crystal. Changes in pre-tilt angel (the angle that the molecule make from the surface) caused large changes in the effective contrast and disinclination structure of the nematic devices. These variations were critical parameters in the fabrication of super-twist and electronically controlled birefringence displays. In order to perform repeatable experiments with rubbing techniques, a rubbing machine with micrometer pressure adjustments and a microprocessor controlled linear stage was designed and built. The settings which worked best for the twisted nematic mode microdisplays can be approximated by hand with ten passes of a velvet-coated piece of plastic at a pressure of two pounds per square inch.

The other method of surface preparation used for the microdisplays was to evaporate an additional layer of $SiO_x$ at an angle to the substrate. This in turn created a rippled surface with texture on the micron scale. This was enough to influence the liquid crystal alignment. Different angles of evaporation resulted in different pre-tilt angles.

The early microdisplay experiments with skew evaporation performed poorly because of the poor planarity of the 2 micron CMOS process used to fabricate the chips. The polyimide rubbing techniques were able to compensate for this to some extent by preferentially filling in the holes in the passivation layer during the spinning process. With the later more planar microdisplay chips, silicon oxide evaporated at 73 degrees performed almost as well as the rubber polyimide, but further experiments with skew evaporation are necessary in the next generation of substrates. In spite of early difficulties, in the long-run, the evaporation techniques were found to be much more repeatable than the rubbing methods.

One element of safe surface preparation was static protection. CMOS dice are very sensitive to high pressure and static discharge. So when coatings were applied by a thermal or e-beam evaporator, all the leads of the chip package were grounded in a custom jig. Low evaporation rates were used so that charge accumulation in isolated circuit nodes leaked away through the substrate before breaking down any oxides. With the rubbing techniques, one additional concern was that the chip be particularly clean. Small specs of dirt concentrated a lot of pressure in a small area and could dig furrows through all the layers of circuitry when the die surface was rubbed.

The most attractive and promising techniques were found using those materials such as the polymer-dispersed and guest-host displays which required little or no surface

preparation. As those materials mature further, the need for this series of surface treatment will decline.

### 4.4 Spacers

Spacers were inserted between the substrate and coverglass to insure that there was a precise and uniform cell thickness. For very narrow cell gaps in the one micron to three micron range, a spun layer of polyimide was photo-lithographically etched to remain only around the edge of the die. These very narrow-gap displays were extremely sensitive to dust and contamination. For thicker spacing as used in the twisted nematic mode microdisplays, small micro-spheres and rods were disbursed across either the cover or the substrate before they were bonded together. Cell spacing was optimized for maximum contrast and minimum switching voltages. With the ZLI-4550 nematic mixture, a ten micron cell gap switched nicely at 0.3 volts.

A common technique for disbursing the glass spacers in industry is to mix them in a volatile solvent like freon or methanol, and then spray the substrate. The solvent evaporates, leaving a distribution of spacers proportional to their initial concentration in the solvent.

This aerosol spacer application worked fine for larger flat panel displays and even the scattering-mode microdisplays, but failed miserably when the spacers themselves were almost as large as the pixels in the display. The technique of choice for the early microdisplays was to mix the spacers directly with the glue used to bond the coverglass to the substrate. Then, spacing and bonding was performed in a single step as described below. The whole spacer issue was solved with the most recent ferroelectric microdisplay prototype which had the spacers built into the periphery of the VLSI circuit layout.

### 4.5 Coverglass to Substrate Bonding

In most larger flat-panel display manufacturing process, a glue gasket is applied to the coverglass with a tiny 6 mil dispensing needle, the spacers are sprayed on, and the glass is pressed down onto the substrate. The two millimeters of bleed in the strip of glue is acceptable for a 10 inch display, but would obscure more than a third of a microdisplay. The technique which worked best for the early microdisplays, was to hand apply minuscule amounts of glue (with spacers mixed in) to two opposite edges of the coverglass, and gently squeegee off as much as possible, relying on the spacers to preserve a thin layer. Later microdisplay designs which included the integrated spacers were merely clamped together, and a glue bead was applied around the die edges.

### 4.6 Liquid Crystal Filling

The standard liquid crystal filling method usually follows the cover-to-substrate bonding process, where a glue gasket is formed around the entire edge of the substrate save for a small hole through which the liquid crystal material is inserted. This is usually done by putting the cell in a vacuum, placing a tiny drop of liquid crystal material at the fill hole in the glue gasket, and raising the pressure of the vacuum chamber so the liquid crystal is sucked in with no bubbles. Then the fill hole is sealed with an additional glue plug. The whole procedure is best carried out on a hot stage so that the liquid crystal material can be heated past its clearing point and will flow more easily against the substrate and cover surfaces with no initial directional bias from the filling process. This is called back-filling, and requires a vacuum chamber with a hot plate and a mechanical feed through.

5. **Integrated Optics**

This section covers the application of microdisplays to tunable optical elements and integrated optics devices. The first part covers, in particular, the formation of electronically tunable gratings and gradient-index lenses with the microdisplays. The second section describes tunable integrated waveguides and their extension to more complex devices.

As discussed in previous sections, it is possible to drive birefringent liquid crystal materials with VLSI circuits to modulate the local index of refraction by reorienting nematic molecules with an electric field. If the pixel electrodes are situated in an elongated linear array, the result is a tunable reflective grating, in which each aluminum grating strip has a modulable additional phase delay due to the oriented liquid crystal molecules. When the electrodes are fashioned in a radially symmetric array, the modulated liquid crystals can form either a converging or diverging optical element. Further, the ability to fabricate tunable phase gratings with spatial resolution approaching the wavelength of light suggests the possibility of truly portable real-time holographic displays.

Electronically tunable waveguides have also been fabricated by laminating a liquid crystal layer on top of a microdisplay chip used as an active matrix backplane. Intensity, polarization, mode-shape, mode distribution, and the waveguide position can all be modulated using applied fields. Possible applications include auto-aligning integrated optoelectronic packages, integrated optical multiplexers, tunable optical clock-distribution networks, and truly integrated spatial light modulators for optical correlation and signal processing.

## 5.1 Gratings and Lenses

It is now possible to fabricate electrode arrays at useful resolutions for the manufacture of visible-wavelength scale phase modulators using standard CMOS VLSI technology. This means that it is now possible to construct useful Fresnel or zone-plate type lenses and generate useful focal length lenses that are electronically tunable.

The problem with traditional gradient-index liquid crystal lenses is described below. If the phase delay through a lens of thickness d and index of refraction n(x,y), is

$$\phi(x,y) = \frac{2\pi}{\lambda} dn(x,y)$$

(5.1)

and the local index can be modulated electronically to range from the ordinary to extraordinary values of the liquid crystal material, a radially-symmetric lens can be constructed with the index a function of radius. For example,

$$n(r) = A + Br^2, where \left. \begin{array}{c} n_{r=0} = n_{\parallel} \\ n_{r=r_0} = n_{\perp} \end{array} \right\}$$

(5.2)

are the boundary conditions. Then,

$$n(r) = n_{\perp} + \left( \frac{n_{\perp} + n_{\parallel}}{r_0^2} \right) r^2 ;$$

(5.3)

which gives the optical transmission function

$$t(r) = e^{i\frac{2\pi dn}{\lambda}} = e^{i\frac{2\pi d}{\lambda}\left( n_{\parallel} + \frac{n_{\parallel} - n_{\perp}}{r_0^2} \right) r^2}$$

(5.4)

which can be rewritten as

$$t(r) = e^{i\frac{2\pi dn}{\lambda}n_{11}} \, e^{i\frac{2\pi d}{\lambda}\left(n_{11}+\frac{n_{11}-n_{\perp}}{r_0^2}\right)r^2}$$

(5.5)

When this is compared with the transmission function of a spherical lens of focal length $f$,

$$t_{sphere}(r) = e^{i\frac{2\pi dn}{\lambda}} \, e^{-i\frac{2\pi}{2\lambda f}r^2}$$

(5.6)

it is clear that the maximum focal length of this type of tunable liquid crystal system is given by

$$\frac{1}{f} = \frac{2d(n_{11}-n_{\perp})}{r_o^2}$$

(5.7)

So for a traditional material like MBBA which has $n_e$=1.8 and $n_o$=1.56, for a 1 cm wide 10 micron thick lens, the minimum focal length is around 16.6 meters. This is not a very useful microscopic lens except perhaps for slow adaptive optics applications with long focal lengths like astronomy through atmospheric turbulence. However when the same lens is realized across 100 square microns of VLSI, the focal lengths become quite reasonable, and the range extends even further with Fresnel patterns.

There are, however, two remaining drawbacks. First, this lensing effect only works for the component of polarization in the plane of the modulated liquid crystal's long axis. Two of these cells could, however be stacked to effect both components, at which point the polarizers could be discarded. The real problem is that silicon is practically opaque at visible wavelengths. Without considerable process development for

backside-thinning of wafers, the tunable liquid crystal elements on silicon are restricted to reflected-mode.

### 5.2 Tunable Waveguides

A tunable microdisplay waveguide is operated in a mode similar to the normal micordisplays. A CMOS VLSI DRAM array acts as an active matrix backplane and stores charge on tiny, 10-micron pixel pads. When an appropriate liquid crystal material is sandwiched between the VLSI backplane and an indium-tin-oxide coated coverglass connected as a common ground; local fields over each pixel storage pad can alter the local alignment of the liquid crystal. The optical anisotropy of the liquid crystal material then leads to local changes in index of refraction, just as for the lenses and gratings above.

If the applied fields are patterned appropriately across the backplane, isolated strips of effectively higher index material can be used as waveguide structures for propagation of signals in the plane of the chip. More complex structures including splitters and couplers can also be introduced electronically with the careful combination of cell surface preparation and applied fields. In other words, small liquid crystal-on-silicon spatial light modulators can be used "sideways" with optical signals traveling through the liquid crystal materials in the plane of the microchip. The result is an integrated optoelectronic device whose optics can be programmed after fabrication.

### 5.3 Theory of Operation

The range of geometries that a liquid crystal waveguide structure can realize by orienting the birefringent molecules is limited by their symmetry properties as well as the equilibrium surface alignment set during the fabrication process. One of the best light-guiding configurations uses a parallel-rubbed homogenous alignment of nematic liquid crystals.

In this case, both the substrate and the coverglass are rubbed in parallel directions so that in equilibrium with zero applied field, the liquid crystal molecules will tend to align in a preferred direction in the plane of the chip. When a field is applied across a strip of pixels, the LC material above the strip align with the field to orient perpendicular to the material over the uncharged region, or normal to the plane of the substrate. This strip of perpendicular alignment is effectively of higher index than the surrounds with respect to a light wave polarized in the plane of the chip.

The above description accounts for confinement in the plane of the substrate, but does not serve to mitigate mode coupling to the substrate or coverglass. Vertical confinement is actually accomplished by reducing the drive voltages used to reorienting the liquid crystal. In contrast to normal liquid crystal displays which utilize the highest possible drive voltages to most quickly and completely disrupt the equilibrium alignment, the waveguide device is better served by tuning the pixel voltages to intermediate levels where surface alignment effects dominate near the substrate and coverglass, and only the central parts of the cell are reoriented along the electric field. The waveguide can be moved by turning on different pixels, and the confinement properties and waveguide radius can be modulated by changing the relative voltages over the guiding and cladding areas.

So for example, consider the horizontal guiding effect of MBBA, a typical nematic mixture, driven by a 10 micron wide high-voltage strip down the center of a microdisplay. If a linearly polarized optical field aligned with the z-axis is propagated along one of these tuned waveguides, then

$$E_x(x,y,t) = E(y)e^{i(k\beta_n x - \omega t)}$$

(5.8)

where $k=2\pi\lambda$, and $\beta_n$ is the propagation constant of the $n$th guided mode. Maxwell's equations for E(z) is

$$\frac{\partial^2 E}{\partial y^2} + k^2\left[n^2(y,V) - \beta_n^2\right]E = 0$$

$$(5.9)$$

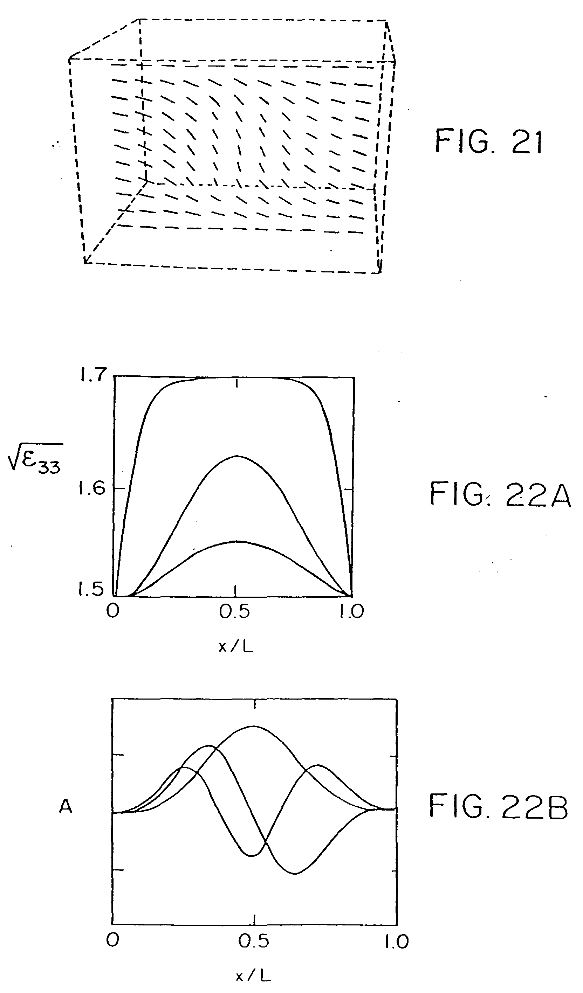

The director field in FIG. 21 was obtained from a numerical simulation and then equation 5.9 was solved numerically using the shooting method to generate estimates of the propagated mode shapes. FIG. 21 shows the simulation results for a pneumatic material with a high field applied across a strip running into the page down the center of the simulated liquid crystal volume. The intermediate applied voltage combined with strong surface interactions at the top cover and substrate leave only a central portion of the liquid crystal volume aligned vertically providing vertical as well as horizontal waveguide confinement. If a linerally polarized electromagnetic wave is propogated down the strip of material that is vertically oriented, lower-order modes will be confined. Several director profiles for different applied voltages along with the first few propagated modes in a simulated waveguide of 10 microns width are shown in FIGs. 22A and 22B. The graph in FIG. 22A shows the vertical component of the dielectric constant across a 10-micron strip of liquid crystal in the simulation of FIG. 21. Intermediate voltages provide a compromise between maximum change in the index of refraction and larger areas of lower-index cladding at the edges of the cell. The graph in FIG. 22B shows the first few confined modes for the intermediate director profile.

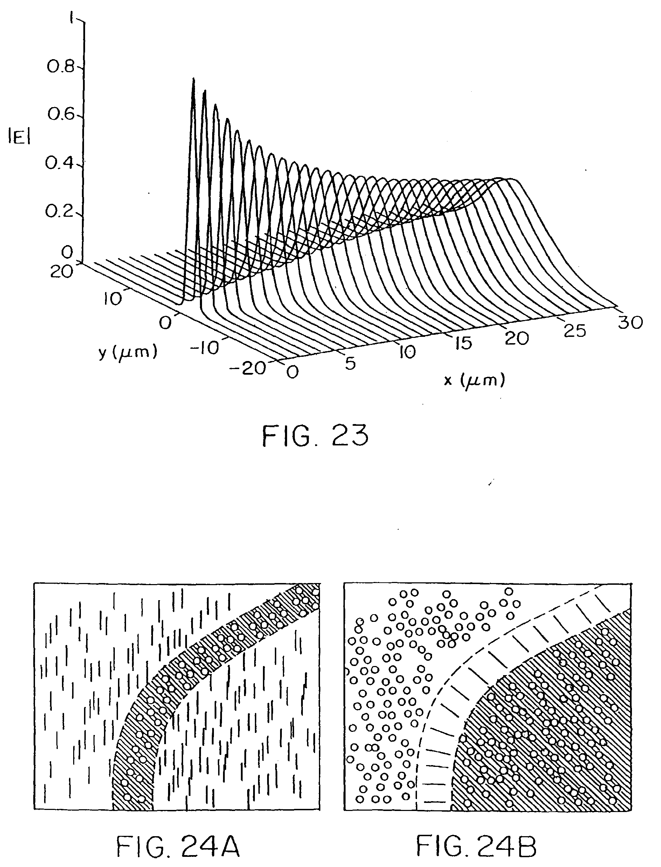

When an optical simulator is used to propagate a gaussian beam down the simulated high-index region of the tunable waveguide, the result is a guided mode as seen in FIG. 23. FIG. 23 shows one degree-of-freedom in a simulated gaussian beam propogated the length of a 10-micron-wide strip tunable

waveguide using the BPM approximation. Note the confined mode which is stable after the initial transient. Note that this simulation, while not exactly calibrated, matches the qualitative behavior of the scattering data for the actual microdisplay-based tunable waveguide.

One problem with this scheme is that the guide functions well as long as it remains oriented in a single direction, as the liquid crystal's effective equilibrium index of refraction is anisotropy. This means that as the waveguide changes direction in a turn, the "cladding" index varies. While this might be slightly compensated with carefully chosen pixel patterns, and regulating the relative change in index through turns, there are other configurations that don't have this limitation.

Another alignment scheme which shows promise uses fringing fields between pixels to orient the liquid crystal material rather than fields between pixels and the coverglass. In this arrangement, the substrate and coverglass surfaces are prepared with a surfactant so that in equilibrium, the liquid crystals align homeotropically, or perpendicular to the substrate. Waveguides are realized by writing neighboring pixels with opposite voltages. This creates a fringing field large enough to orient the liquid crystals between the pixels parallel to the substrate and thus create areas of differing index. While this scheme promises more freedom in directing single waveguides across the surface of the chip, it limits the performance of more complicated structures such as splitters and couplers.

FIGs. 24A and 24B show schematic top-views of liquid crystal alignment for two different modes of waveguide operation. FIG. 24A shows a homogeneously aligned cell with a voltage applied in the darkened area. This results in the direct-field mode of waveguide operation where the cladding

index varies with the guide curvature. FIG. 24B shows a higher voltage applied in the darkened area resulting in a fringing field along the high-to-low voltage interface. This mode of operation allows the relative indicies of the effective core and cladding to remain constant.

### 5.4 Experimental Results

#### 5.4.1 Materials Issues and Preparation

The liquid crystal laminate materials were chosen to make the local index of refraction manipulation as simple as possible, with alignment schemes chosen to be uniform across the entire waveguide device. A series of materials were chosen for experimentation with different device modes focusing primarily on readily available nematic materials. The waveguide device has the same general materials requirements as most active-matrix liquid crystal displays with the additional constraint that the material switch within the operational ranges of the CMOS driving circuits. Each mixture was based on a low viscosity liquid crystal with high dielectric anisotropy. These specifications guaranteed that switching voltages would be as low as possible. Mixtures and modes that required minimal surface preparation on the die were preferred. The nematic materials used were ZLI-4350, and ZLI-2340 from Merck. These were also the first materials to work with the microdisplays.

#### 5.4.2 Spacers

Spacers were inserted between the substrate and the coverglass to insure precise and uniform cell thickness. Small micro-spheres and rods were dispersed along the edges of either the cover or the substrate before they were bonded together. In contrast to display devices, the liquid crystal waveguide structures do not need to be driven to mechanical saturation, and in-fact, perform better at intermediate voltages. Larger cell gaps performed better in avoiding mode coupling to the

substrate and the coverglass. With the ZLI-4550 nematic mixture, twelve and sixteen micron cell gaps switched nicely between 0.3 and 3.1 volts.

## 6. The Next Steps

### 6.1 From Displays to Holograms

While the series of microdisplay devices described above promise a new generation of portable virtual imaging applications, there is one elusive problem that cannot be solved using merely the intensity modulation of light. The problem arises when two displays are used in a head-mounted configuration, one before each eye. When slightly different images are presented to each eye, a physiological conflict begins. The motivation of the offset imagery is to generate artificial stereopsis, or apparent depth to various objects in the image. But this perceived depth gleaned from the tension of the eye muscles which control the vergence of each eye's optical axis is in conflict with the tension of the inner eye muscles which control the depth of focus for the eye.

The focal plane of the display is set by the optical system, and is fixed. The perceived depth due to the offset-induced vergence varies from object to object in the image. When these groups of muscles experience conflicting tensions, headaches and nausea result. The only way this problem can be permanently solved while still viewing images with three-dimensional information, is to encode image data in phase as well as intensity, and this requires a holographic medium.

But as shown in the previous section, it is now possible, using microdisplay technology, to fabricate electrode arrays at useful resolutions for the manufacture of visible wavelength-scale phase modulators using standard CMOS VLSI technology. This technology has been demonstrated using a microdisplays with a four micron scale grating pitch. Useful

Fresnel type, or zone-plate type lenses to generate useful focal length lenses which are electronically tunable can now be constructed with no moving parts. The same problems of switching speed still plague the optical computing applications, but there is one other device which might benefit. A hologram is merely a phase grating with anisotropies on the order of visible wavelengths. This is precisely what has been constructed with a microdisplay operating in a phase-modulation configuration. The microdisplay device only needs to be updated at video frame rates, so the mechanical liquid crystal switching speed is fast enough. Given that a single-die computer can somehow generate enough 3-D phase information at video rates and feed it to the microdisplay (here is where the processor-display integration becomes absolutely critical, as 3-d data bandwidth would be a real problem from computer to display) a .3 micron CMOS VLSI microdisplay could generate a video rate holographic display.

So the ability to modulate phase, as well as intensity may eventually lead to holographic microdisplays, but will require the complete integration of specialized microprocessors designed to compute holographic ray-traces. Before that stage, there is another potentially fruitful avenue of research. With the ability to modulate phase and control wavefronts, the need for additional lenses disappears, and lensless virtual displays become possible. For these devices, only a single phase pattern is necessary, and no additional computation would be required. Prescriptions could be changed with updated software. Tunable eyeglasses/displays will come long before holographic displays.

## Claims

1. A visual display comprising:

    a miniature display (105;205) compatible with VLSI technology and including an array of display elements of sufficient resolution to provide a desired image quality, and a VLSI circuit monolithically integrated with said array for driving elements to form images on the array that are generally too small to be viewed by the naked eye, said VLSI circuit including input terminals for providing electrical signals thereto to generate such images; characterised in that said array comprises four million display elements formed on an area of one square centimeter, said visual display further comprising:

an optical system (120;220) disposed in front of the miniature display (105;205) for enlarging such images to be visible at the desired image quality to the naked eye or for recording such images such that they can be displayed or viewed by the naked eye.

2. The visual display of claim 1, wherein said miniature display (105;205) is a liquid crystal display.

3. The visual display of claim 2, wherein said liquid crystal display comprises a transparent cover (430) positioned above said array of display elements, a transparent electrode (425) deposited on the surface of the cover (430) facing said array, and a liquid crystal material (435) disposed between said array and said transparent electrode (425).

4. The visual display of any preceding claim, wherein said VLSI circuit includes a microprocessor.

5. The visual display of claim 2, wherein the display elements (805) in the array are displaced by small random distances from the positions of elements (800) in a corresponding symmetrical array in order to reduce image aliasing.

6. The visual display of claim 5, wherein the small random distances from the positions of elements (800) in the array are determined by the use of a silicon compiler program.

7. The visual display of claim 2, wherein said display elements are grouped to form super-pixels (900), each said super-pixel (900) comprises a central display element (905) surrounded by a plurality of ancillary display elements (906-911), said central display elements (905) being directly driven by said VSLI circuit and each of said ancillary display elements (906-911) being driven in response to electrical signals driving neighbouring central display elements (905).

8. The visual display of any preceding claim, further comprising a light source (115;215) for illuminating the miniature display (105;205).

9. The visual display of claim 2, wherein said VLSI circuit includes a signal processing circuit for processing signals applied through the input terminals to affect the displayed image.

10. The visual display of claim 2, wherein said optical system (120;220) is characterizable by an optical distortion function and said display elements are positioned and scaled to approximate the inverse of such optical distortion function of said optical system to compensate distortion of the image displayed in said array by said optical system.

11. The visual display of claim 10, wherein said optical system is an optical magnifier, and said inverse function is approximately $(r_i + kr_i^3)$ where k is approximately 0.32 and $r_i$ is the radial distance from a point on the magnifier to a central optical axis of said magnifier.

12. The visual display of claim 10, wherein said inverse of optical distortion function is implemented by using a silicon compiler software program.

13. The visual display of claim 2, wherein liquid crystal material is a dynamic scattering mode liquid crystal material.

14. A method of providing a visual display having an array of display elements for displaying images on said array, characterised in that:

said array comprises four million display elements formed on an area of one square centimeter; and further comprising the step of arranging said display elements to form super-pixels (900), each of said super-pixels (900) comprising a central display element (905) surrounded by plurality of ancillary display elements (906-911), said central elements (905) being directly driven by a driving circuit and each of said ancillary display element (906-911) being driven in response to electrical signals driving neighbouring central display elements (905).

15. The method of claim 14, wherein said visual display is a liquid crystal display.

**16.** The method of claim 15, wherein said liquid crystal display is compatible with VLSI technology and said driving circuit is a VLSI circuit monolithically integrated with said array.

**17.** A method of forming a display comprising a pixel array to compensate the optical distortion of an optical system used to view said display, characterised in that said array comprises four million pixels formed on an area of one square centimeter, said optical system being characterizable by an optical distortion function, comprising the step of positioning and scaling the pixels in accordance with an inverse function of such optical distortion function of said optical system.

**18.** The method of claim 17, wherein said optical system is an optical magnifier, and said inverse function is approximately expressed as $(r_i + kr_i^3)$ where k is approximately 0.32 and $r_i$ is the distance from a point on said optical magnifier to the optical axis.

**19.** The method of claim 18, wherein said step of positioning and scaling the pixels in accordance with said inverse function of said optical distortion function is implemented by using a silicon compiler software program.

**20.** A virtual image display permitting a viewer to view images, comprising:

a miniature display (315) compatible with VLSI technology and including an array of display elements of sufficient resolution to provide a desired image quality, and a VLSI circuit monolithically integrated with said array for driving said display elements to form images on the array that are generally too small to be viewed by the naked eye, said VLSI circuit including input terminals for providing electrical signals thereto to generate such images;

an optical system (325) disposed in front of the miniature display (315) for enlarging such images to be visible at the desired image quality to the naked eye;

an eye glass frame (300);

at least one lens (305;310) having a reflective or partially reflective surface (304;309) and curved in accordance with a three-dimensional elliptical surface mounted therein; and

wherein said miniature display (315) is positioned such that images displayed thereon are reflected by said lens (305;310) into the eyes of a person wearing said eye glass frame (300);

said virtual image display further comprising a light source (320) for illuminating the miniature display (315).

FIG. 1

FIG. 2

FIG. 3A

FIG. 3B

FIG. 4

FIG. 5A

FIG. 5B

524

521

511

512

FIG. 5C

610

600

605

FIG. 6A

FIG. 6B

FIG. 7

FIG. 8

FIG. 9

EP 1 072 934 A2

FIG. 10A

FIG. 10C

FIG. 10B

polarizer

color filters

C material

polarizer

## FIG. 11
### Prior Art

1010

1018a    1018b    1018c

1012 →

1014

1014c

1016    1014a    1014b

## FIG. 12

60

1030
1028
1030
1032
1034

FIG. 14A

1038
1036
1038
1040
1034

FIG. 14B

1044
1042
1044
1046
1046
1034

FIG. 14C

1024a
1024b
1024c
t₁
t₂
t₃

1026a
1026b
1026c

1020
1022
1023

FIG. 13

FIG. 14D

1033
1049
1047
1043
1045
$d_3$
$d_2$
$d_1$
1041
1039
1037
1034

FIG. 14E

1057
1055
1053
1051

FIG. 14F

1061
1059
$d_0$
1053
1051

FIG. 14G

1065
$P_1$
$P_2$
1067
1063

FIG. 14H

1057a
1055a
1059a
1053a
1051a
1050a

FIG. 14I

1058a
1063a
1061a
1060a

EP 1 072 934 A2

EP 1 072 934 A2

FIG. 15A

FIG. 15B

1080

1088

1090
1092
1094
1096
1086
1098

1084

1082

FIG. 16

FIG. 17

1102

1104

1106

1108

1100

1110

FIG. 18

FIG. 19

FIG. 20

Coverglass

ITO

Alignment
Layer

LC Material

Spacers

CMOS
Substrate

FIG. 21

FIG. 22A

FIG. 22B

FIG. 23

FIG. 24A

FIG. 24B